# EUROPEAN PATENT SPECIFICATION

(11) **EP 4 511 409 B1**
(45) Date of publication and mention of the grant of the patent: **11.03.2026**
(21) Application number: 23720849.1
(22) Date of filing: 19.04.2023
(51) Int. Cl.: C08G 18/08, C08G 18/10, C08G 18/48, C08G 18/76, C09D 5/33, C09D 175/08, E04D 7/00, C08G 18/83

(54) **POLYURETHANE-BASED COATINGS WITH HIGH SOLAR REFLECTANCE**
BESCHICHTUNGEN AUF POLYURETHANBASIS MIT HOHEM SONNENREFLEXIONSINDEX
REVÊTEMENTS À BASE DE POLYURÉTHANE À INDICE DE RÉFLECTANCE SOLAIRE ÉLEVÉ

(30) Priority: 20.04.2022 EP 22305580
(43) Date of publication of application: 26.02.2025
(73) Proprietor: Saint-Gobain Weber France, 94370 Sucy en Brie (FR)
(72) Inventor: CEDANO SERRANO, Francisco Javier, 93300 Aubervilliers (FR); VARELAS, Konstantinos, 32011 Oinofyta (GR); HESSELBARTH, Frank, 92400 Courbevoie (FR); RIBEIRO DE SOUSA FERREIRA, Pedro Miguel, 3800-055 Aveiro (PT); BENENSKY, Paul, Malvern, Pennsylvania 19355-1114 (US); MASSARA, Valerio, 23350 Genouillac (FR)
(74) Representative: Saint-Gobain Recherche
(86) International application number: PCT/EP2023/060149
(87) International publication number: WO 2023/203081

(56) References cited:
- WO-A1-2021/074134
- CN-A- 105 238 247
- CN-A- 113 185 908
- CN-A- 114 149 734
- US-B2- 9 499 712

## Description

### BACKGROUND OF THE DISCLOSURE

### 1. Field of Disclosure

The present disclosure relates generally to polyurethane-based coatings with high solar reflectivity, for example, for use as a coating on a building surfaces.

### 2. Technical Background

Coatings disposed on top of roofing shingles, roofing membranes or other building substrates provide numerous advantages, such as protection from the weather, water and/or algae resistance, and enhanced reflectivity. Coatings that have enhanced reflectivity can provide passive cooling to a roof, reducing both building cooling loads and the urban heat effect. Polyurethane dispersions (PUDs) are known to be suitable coatings that enhance the reflective properties of roofing products for cool roof systems.

The main indicator to evaluate the performance of PUD coatings is to measure the Solar Reflective Index (SRI). This measurement is a combination of the coating's emissive and reflective properties. The new proposed energy code in California (Title-21) and new energy code in Los Angeles, USA (County Title 31) prescribe new standards for cool roof performance. The requirements are that a low-slope roofing surface must achieve either an aged Solar Reflectance (aged-SR) higher than 70% or an aged Solar Reflective Index (aged-SRI) after 3 years higher than 85.

However, commercially available PUDs often lack the durability necessary to reach these increased standards. Overtime, PUDs often turn a yellow color, decreasing their solar reflectance and changing the aesthetic of the roofing product. This yellowing is for example attributed to oil diffusion from the bitumen layer of the roofing product to the PUD layer. Further, PUDs can be costly, both in terms of the raw ingredients within the coatings and the time it takes to manufacture roofing products with the coating. Accordingly, the main challenges associated with PUDs are to develop cost viable options that are durable (e.g., no yellowing after either UV or thermal aging and no cracking when rolled or bent) and fast drying so as to be used directly in current production lines (e.g., around 20 second), while maintaining the desired SRI performance. Accordingly, there is a need in the art to improve current PUD coatings to improve the performances of the overall roofing system. CN113185908 concerns high-performance reflective and heat-insulating water-based external wall elastic paint and preparation method.

### SUMMARY

In one aspect, the present disclosure provides an aqueous coating composition comprising:
a functionalized anionic polyurethane present in an amount in the range of 2-40 wt% of the composition;
a water-insoluble transition metal crosslinking agent present in an amount in the range of 0.2-40 wt%, preferably 0.2-15 wt% of the composition;
water; and
at least one of:
   a hydrophobic acrylic polymer present in an amount in the range of 2 wt% to 55 wt%, preferably 2 wt% and 40 wt%, and
   a near-infrared reflective colored pigment present in an amount of at least 0.05 wt%, e.g., in the range of 0.05 wt% to 5 wt%.

In another aspect of the disclosure, an aqueous coating composition includes water, and, dispersed in the water,
a functionalized anionic polyurethane present in an amount in the range of 10-80 wt%, preferably 20-80 wt% of the composition on a dry solids basis;
a water-insoluble transition metal crosslinking agent present in an amount in the range of 0.5-30 wt% of the composition on a dry solids basis; and
at least one of:
   a hydrophobic acrylic polymer present in an amount in the range of 20 wt% to 80 wt% on a dry solids basis, and
   a near-infrared reflective colored pigment present in an amount of at least 0.1 wt%, e.g., in the range of 0.2 wt% to 10 wt% on a dry solids basis.

Another aspect of the disclosure is a coated surface comprising a substrate having a layer of the coating composition as described herein disposed thereon.

Another aspect of the disclosure is a solar reflective coating that is a coated dried product of the coating composition as described herein. The coating can include
a functionalized anionic polyurethane present in an amount in the range of 10-80 wt%, preferably 20-80 wt% of the composition on a dry solids basis;
a water-insoluble transition metal crosslinking agent present in an amount in the range of 0.5-30 wt% of the composition on a dry solids basis; and
at least one of:
   a hydrophobic acrylic polymer present in an amount in the range of 20 wt% to 80 wt% on a dry solids basis, and
   a near-infrared reflective colored pigment present in an amount of at least 0.1 wt%, e.g., in the range of 0.2 wt% to 10 wt% on a dry solids basis.

Another aspect of present disclosure provides a roofing material comprising:
a roofing product; and
a solar reflective coating as described herein disposed on top of the roofing product.
In some embodiments, the roofing product is a roofing membrane. In other embodiments, the roofing product is a roofing shingle.

Another aspect of the disclosure is a solar-reflective roof, comprising a roof deck and a roofing material as described herein disposed thereon.

Another aspect of the disclosure is a solar-reflective building surface comprising a building surface; and a solar reflective coating as described herein disposed on the building surface.

Another aspect of the disclosure is a method of making a solar-reflective roof as described herein, comprising providing a roof deck having disposed thereon the roofing product; and coating and drying on the roofing product an aqueous coating composition as described herein, preferably comprising water, and, dispersed in the water,
- a functionalized anionic polyurethane present in an amount in the range of 10-80 wt%, preferably 20-80 wt% of the composition on a dry solids basis;
- a water-insoluble transition metal crosslinking agent present in an amount in the range of 0.5-30 wt% of the composition on a dry solids basis; and
- at least one of:
   a hydrophobic acrylic polymer present in an amount in the range of 20 wt% to 80 wt% on a dry solids basis, and
   a near-infrared reflective colored pigment present in an amount of at least 0.1 wt%, e.g., in the range of 0.2 wt% to 10 wt% on a dry solids basis.

Additional aspects of the disclosure will be evident from the disclosure herein.

### BRIEF DESCRIPTION OF FIGURES

The accompanying drawings are included to provide a further understanding of the methods and devices of the disclosure, and are incorporated in and constitute a part of this specification. The drawings are not necessarily to scale, and sizes of various elements may be distorted for clarity. The drawings illustrate one or more embodiment(s) of the disclosure, and together with the description serve to explain the principles and operation of the disclosure.
FIG.1 is a picture of the roofing product as described herein.
FIG. 2A is a set of pictures of samples prepared with different coverage rates of a PUD composition, and FIG. 2B is a plot the reflectance (%) versus wavelength for samples prepared with different coverage rates of a PUD composition and shown in FIG 2A.
FIG. 3 is a picture of roofing products with and without a PUD composition applied thereon before and after the aging test according to ASTM D7897.
FIG. 4 is a plot of the reflectance (%) versus wavelength for roofing products with and without a PUD composition applied thereon before and after the aging test according to ASTM D7897.
FIG. 5 is a picture of the thermal aging test for roofing products coated with a PUD composition.
FIG. 6 is a picture of a roofing product coated with a PUD composition before and after the thermal aging test.
FIG. 7 is a bar graph of the results of the SRI before and after the thermal aging test for a roofing product coated with and without a PUD coating.
FIG. 8A is a picture of a sample roofing product using a coating that includes Mowlitith 7728. FIG. 8B is a picture of a sample roofing product with the coating as described herein applied thereon.
FIG. 9A is a schematic of a PUD coating without a thickening agent. FIG. 9B is a picture of a PUD coated roofing product without a thickening agent included in the coating composition. FIG. 9C is a schematic of a PUD coating with a thickening agent. FIG. 9D is a picture of a PUD coated roofing product with a thickening agent included in the coating composition.
FIG. 10 provides a plot of viscosity vs. shear for a coating composition of the disclosure.
FIG. 11 provides pictures of the coating after being heated at 70°C for (a) 1 day, (b) 5 days, and (c) 9 days.
FIG. 12A is a plot of the reflectance (%) versus wavelength for coated roofing as described herein before and after thermal aging. FIG. 12B is a picture of a coated roofing product ng as described herein before thermal aging.
FIG. 13A is a picture of an infrared lamp drying set up that monitors weight loss of a sample over time. FIG. 13B is a graph of the weight percentage as a function of time for different coverage rates and drying temperatures of a coated roofing product as described herein.
FIG. 14A is a picture of a heat gun drying set up that monitors weight loss of a sample over time. FIG. 14B is a graph of the weight percentage as a function of time for different thickening agents include in the PUD coating compositions for coated roofing products as described dried at 110°C.
FIG. 15 are pictures of samples with a coating as described herein applied at different coverage rates and dried at different temperatures.
FIG. 16A is a picture of a roofing product with a coating as described herein prepared with a thickening agent and a coalescing agent and applied on the roofing product at 120°C. FIG. 16B is a graph of the weight loss as a function of time for the sample shown in FIG. 16A.
FIG. 17 is a graph of the initial SRI as a function of dry coverage rate of coatings as described herein applied on roofing products at high temperature.

### DETAILED DESCRIPTION

Current cool roof solutions based on coatings made from polyurethane dispersions (PUDs) often lack the durability necessary to meet the increased solar reflective index (SRI) standards of such roofing systems. Specifically, PUDs often exhibit yellowing upon aging and can often be inflexible and prone to cracking upon rolling or bending. Furthermore, the drying time of many current PUDs is longer than desirable for use in in current production lines. Here, the present inventors have developed PUD coatings for roofing systems that include a polyurethane dispersion and at least one of a hydrophobic acrylic polymer and a near-infrared reflective colored pigment. Other additives, such as thickening agents and coalescing agents can, in certain embodiments, provide further benefits to the composition. The present inventors have found that these PUD-based coatings have a high SRI (even after aging) and are flexible and fast drying.

Accordingly, in one aspect of the disclosure, an aqueous coating composition includes:
a functionalized anionic polyurethane present in an amount in the range of 2-40 wt% of the composition;
a water-insoluble transition metal crosslinking agent present in an amount in the range of 0.2-15 wt%, preferably 0.5-15 wt% of the composition;
water; and
at least one of:
   a hydrophobic acrylic polymer present in an amount in the range of 2 wt% to 55 wt%, preferably 2 wt% to 40 wt%, and
   a near-infrared reflective colored pigment present in an amount of at least 0.05 wt%, e.g., in the range of 0.05 wt% to 5 wt%.

In another aspect of the disclosure, an aqueous coating composition includes water, and, dispersed in the water,
a functionalized anionic polyurethane present in an amount in the range of 10-80 wt%, preferably 20-80 wt% of the composition on a dry solids basis;
a water-insoluble transition metal crosslinking agent present in an amount in the range of 0.5-30 wt% of the composition on a dry solids basis; and
at least one of:
   a hydrophobic acrylic polymer present in an amount in the range of 20 wt% to 80 wt% on a dry solids basis, and
   a near-infrared reflective colored pigment present in an amount of at least 0.1 wt%, e.g., in the range of 0.2 wt% to 10 wt% on a dry solids basis.

In a particular embodiment, the aqueous coating composition comprises:
a functionalized anionic polyurethane present in an amount in the range of 2-40 wt% of the composition;
a water-insoluble transition metal crosslinking agent present in an amount in the range of 2-40 wt% of the composition;
water; and
at least one of:
   a hydrophobic acrylic polymer present in an amount in the range of 5 wt% to 30 wt%, and
   a near-infrared reflective colored pigment present in an amount of at least 0.05 wt%, e.g., in the range of 0.05 wt% to 5 wt%.

In a particular embodiment, the aqueous coating composition comprises:
a functionalized anionic polyurethane present in an amount in the range of 2-40 wt% of the composition;
a water-insoluble transition metal crosslinking agent present in an amount in the range of 0.5-15 wt% of the composition;
water; and
at least one of:
   a hydrophobic acrylic polymer present in an amount in the range of 2-40 wt%, and
   a near-infrared reflective colored pigment present in an amount of at least 0.05 wt%, e.g., in the range of 0.05 wt% to 5 wt%.

The aqueous coating compositions of the disclosure include a functionalized anionic polyurethane. Functionalized anionic polyurethanes suitable for use in the systems of the present disclosure are described in International Patent Application Publication no. 2021/074134. The functionalized anionic polyurethane can desirably be present in the form of a dispersion in water.

In various embodiments as otherwise described herein, anions of the functionalized anionic polyurethane are carboxylate anions. For example, in various embodiments of the present disclosure as otherwise described herein, the functionalized anionic polyurethane includes both free pending carboxylate groups of formula -COO⁻ M⁺ where M⁺ is a cation resulting from neutralization of carboxylic acid groups with a base, and pending carboxylate ester groups resulting from esterification of free carboxylic acid groups with an epoxysilane (e.g., a water-soluble alkoxysilane). In various embodiments of the disclosure as described herein, the base is an amine-type base. For example, the base may be ethylenediamine.

The present inventors note that anionic polyurethanes that are functionalized by reaction of a fraction of pendant carboxylate groups with an epoxysilane are especially suitable for use in the aqueous coating compositions as otherwise described herein. The epoxy group of the epoxysilane can esterify with carboxylates of the anionic polyurethanes, thereby decreasing the overall anionic charge density of the polyurethane and covalently bonding the alkoxysilyl groups to the polymer. The decrease of anionic charges on the polyurethane can be followed by monitoring the decrease of the negative zeta potential over the reaction time.

The present inventors note that it can be desirable in some embodiments to esterify no more than half of the anionic groups (e.g., carboxylate groups) of the anionic polyurethane. The remaining anionic groups can provide stability to the polyurethane, especially when in the form of a dispersion. But if the anionic polyurethane has too high an anionic charge density, the resulting hydrophilic nature can provide an undesirably high water uptake and thus decrease the durability and mechanical performance of the resulting dried coating. The inventors note that remaining anionic charges can be crosslinked with water-insoluble transition metal crosslinking agents, as described in more detail below, to increase the durability of the final coating without destabilizing the polyurethane dispersion before application to the substrate.

The functionalized anionic polyurethane is the reaction product of a polyisocyanate component and a polyol component. For example, in various embodiments as otherwise described herein, the polyisocyanate component includes one or more aliphatic polyisocyanates. For example, the aliphatic polyisocyanates may be independently selected from 1,6-hexamethylene-diisocyanate, isophorone-diisocyanate, 2,4-hexahydrotoluene-diisocyanate, 2,6-hexahydrotoluene-diisocyanate, dicyclohexylmethane-diisocyanate, norbornane-diisocyanate, cyclohexane-1,4-diisocyanate, 1,12-dodecane-diisocyanate, and 2,2,4-trimethylhexamethylene-diisocyanate. In various embodiments of the present disclosure as described herein, the polyisocyanate component includes one or more aromatic polyisocyanates, for example, one or more of xylylene-diisocyanate, 2,4-toluene-diisocyanate, 2,6-toluene-diisocyanate, tetramethylxylene-diisocyanate, and methylene-diphenyldiisocyanate.

In various embodiments of the present disclosure as otherwise described herein, the polyol component includes one or more of polyether-polyols, polyester-polyols, and polycarbonate-polyols.

The person of ordinary skill in the art will appreciate that the anionic character can be provided as part of the polyol component, as part of the polyisocyanate component, or as part of both. The anionic character can desirably be provided by a carboxylate-functional monomer. But in some embodiments, the anionic character can be provided by a monomer that can later be converted to an anionic group, e.g., as an ester-protected carboxylate. In various embodiments as otherwise described herein, the polyol component includes a polyhydroxylated carboxylic acid (i.e., a molecule that bears at least one carboxylate and at least two hydroxyl groups), e.g., a dimethylol propionic acid.

The person of ordinary skill in the art will appreciate that additional monomers can be present. For example, urea linkages can be included in the polyurethane through the use of polyamines such as ethylenediamine.

In some embodiments of the present disclosure as described herein, the functionalized anionic polyurethane is a reaction product of polyether-polyol, aromatic diisocyanate, dimethylol propionic acid, and ethylenediamine.

The person of ordinary skill in the art will appreciate that the anionic polyurethane can be made using techniques familiar to the skilled artisan, e.g., as described in U.S. Patent no. 7,345,110. In various embodiments of the present disclosure as described herein, the anionic polyurethane is prepared by first preparing an isocyanate-terminated carboxylic acid-pendant prepolymer by reacting a polyol component that includes one or more dihydroxylated carboxylic acids with a stoichiometric excess of a polyisocyanate component. The NCO/OH ratio is in excess of 1, e.g., in the range of 1.2 to 5. The resulting prepolymer can be neutralized with a base to provide an isocyanate-terminated carboxylate-pendant prepolymer. This can be performed, e.g., under shear in water. The base can be, for example, an amine base. The resulting prepolymer can be reacted with a polyamine such as ethylenediamine (e.g., as a chain extender) to form urea linkages and provide a polyurethane having pendant carboxylate groups. A polyamine such as diethylamine can be used to provide both carboxylate neutralization and reaction with terminal isocyanates.

The present inventors note that the anionic polyurethane, before reaction with epoxysilane, desirably has a relatively low acid value (i.e., the amount of mass of KOH in mg required to neutralize one gram of anionic polyurethane), e.g., in the range of 5-25, or 10-25, or 12-25, or 5-18, or 10-18, or 12-18, or 5-17, or 10-17, or 12-17. Anionic polyurethanes having high acid values can require excessive amounts of epoxysilane and/or crosslinking particles. A high amount of epoxysilane can undesirably result in gelation or coagulation of the dispersion, making difficult the preparation of a stable, self-crosslinking material. And high amounts of crosslinking particles can require a higher amount of surfactant for dispersion, which can in turn make the dried coating more hydrophilic and less water-resistant. Provision of an anionic polyurethane with a desirable initial anionic charge along with use of a combination of crosslinking agents (epoxysilane and transition metal-containing particles) in moderate amounts has allowed for the provision of water-based, non-toxic, self-crosslinking polyurethane dispersion having a long shelf life and which, after drying and crosslinking, can provide polyurethane coatings having water resistance and mechanical performance comparable to polyurethane coatings made from solvent-based systems.

In various desirable embodiments, alkoxysilane functionality is added by reaction with an epoxysliane. This can be, for example, through partial esterification of carboxylates with epoxysilane, with the remaining non-esterified carboxylates present for stabilizing a dispersion of the polyurethane and for crosslinking with transition metal compounds upon drying of the coating. The epoxysilane is desirably water-soluble. In various embodiments of the disclosure as described herein, the water-soluble epoxysilane is selected from the group consisting of 3-glycidyloxypropyl-trialkoxysilanes, 3-glycidyloxypropyl-dialkoxyalkylsilanes, epoxycyclohexylethyltrialkoxy-silanes, epoxycyclohexyl-ethyldialkoxyalkylsilanes, and water-soluble epoxy-functional alkoxysilane oligomers. Suitable water-soluble epoxysilane oligomers include those having a short siloxane chain with pendant epoxy groups. The preparation of such oligomers is described for example in European Patent Application Publication no. 1896522, and they are available under the reference CoatOSil MP 200 from Momentive.

The alkoxy groups of the alkoxysilane are desirably ethoxy and/or methoxy.

The person of ordinary skill in the art will select reaction conditions based on the present disclosure and the particular materials used. For example, in certain embodiments as otherwise described herein, the epoxysilane is added to the anionic polyurethane in an amount in the range of 0.3-5.0% by weight, for example, 0.4-4.0% or 0.5-3.0% by weight with respect to the dry weight of the anionic polyurethane. When the amount of epoxysilane is too high, the reaction mixture gels during the reaction time and is no longer suitable as a coating composition. And for amounts that are too low, the remaining anionic charge density on the anionic polyurethane is too high and requires the addition of excessive amounts of crosslinking particles. The amounts of crosslinking particles however cannot be increased at will because there is a risk of sedimentation or a need of excessively high amounts of dispersing agent such as surfactant. The epoxysilane can be added slowly, e.g., dropwise, to the anionic polyurethane at room temperature with agitation. The resulting mixture can be left to react for at least several hours. It is not necessary to keep the reaction mixture under agitation, nor is it necessary to heat the reaction mixture. The reaction time at room temperature (20 °C) is generally 10-100 hours, e.g., 10-100 hours, or 40-75 hours.

As noted above, in one aspect the aqueous coating composition of the present disclosure includes a functionalized anionic polyurethane present in an amount in the range of 2-40 wt% of the composition. For example, in various embodiments as otherwise described herein, the functionalized anionic polyurethane is present in the aqueous coating composition an amount in the range of 2-35 wt%, or 2-30 wt%, or 2-25 wt%, or 2-20 wt%, or 2-15 wt%, or 2-10 wt%, or 5-40 wt%, or 5-35 wt%, or 5-30 wt%, or 5-25 wt%, or 5-20 wt%, or 5-15 wt%, or 10-40 wt%, or 10-35 wt%, or 10-30 wt%, or 10-25 wt%, or 10-20 wt%, or 15-40 wt%, or 15-35 wt%, or 15-30 wt%, or 15-25 wt%, or 20-40 wt%, or 20-35 wt%, or 20-30 wt%, or 25-40 wt%, or 25-35 wt%, or 30-40 wt%.

As noted above, in another aspect, the aqueous coating composition includes 10-80 wt%, preferably 20-80 wt% functionalized anionic polyurethane on a dry solids basis. For example, in various embodiments as otherwise described herein, the aqueous coating composition includes 20-70 wt%, or 20-60 wt%, or 20-50 wt%, or 20-40 wt%, or 20-30 wt%, or 30-80 wt%, or 30-70 wt%, or 30-60 wt%, or 30-50 wt%, or 30-40 wt%, or 40-80 wt%, or 40-70 wt%, or 40-60 wt%, or 40-50 wt%, or 50-80 wt%, or 50-70 wt%, or 50-60 wt% functionalized anionic polyurethane on a dry solids basis. In some embodiments, the aqueous coating composition includes 10-70 wt%, or 10-60 wt%, or 10-50 wt%, or 10-40 wt%, or 10-30 wt%, or 10-20 wt%, or 20-80 wt% functionalized anionic polyurethane on a dry solids basis.

The person of ordinary skill in the art will select relative amounts of functionalized anionic polyurethane, transition metal crosslinking agent, and hydrophobic acrylic polymer and/or near-infrared reflective colored pigment to provide desired coating liquid and material properties, based on the present disclosure. The relative amount of water can be tuned, for example, to provide a desired viscosity and solids concentration to provide a dried coating of a desired thickness.

As described above, the polyurethane dispersion of the present invention includes a water-insoluble transition metal crosslinking agent. The transition metal crosslinking agent can be provided as particles in the final dried coating, and act, e.g., to crosslink carboxylates of the functionalized anionic polyurethane. The crosslinking particles can be incorporated into the coating composition, e.g., after part of the anionic groups have been esterified with the epoxysilane. The transition metal compounds forming the crosslinking particles used in the present invention must be insoluble in the aqueous phase of composition, water-insoluble transition metal compounds being defined for purposes of present application as compounds having a solubility in distilled water at 20 °C of less than 0.001%. Desirably, the aqueous composition does not contain significant amounts of free multivalent transition metal cations which would immediately result in early crosslinking of anionic polymer, and then cause the dispersion to gel, precipitate or sediment. Thus, the coating compositions as described herein are desirably essentially devoid of free multivalent transition metal ions, i.e. they comprise less than 0.1 wt%, preferably less than 0.01 wt% of water-soluble transition metal salts such as for example zirconium potassium carbonates or zirconium ammonium carbonates described for example in US 4,061,720.

In various embodiments of the present disclosure as described herein, the water-insoluble transition metal crosslinking agent is a transition metal oxide, transition metal hydroxide, or transition metal salt. In various particular embodiments, the water-insoluble transition metal crosslinking agent is a transition metal oxide, e.g., zinc oxide, aluminum oxide, tin oxide, and/or tungsten oxide. In various particular embodiments of the present disclosure as described herein, the transition metal oxide is zinc oxide.

The transition metal crosslinking agent is desirably provided with a small particle size, to provide for dispersibility in aqueous systems and to provide a relatively homogenous coating. For example, in various embodiments as otherwise described herein, the crosslinking agent has a median particle diameter in the range of 1-20 microns, e.g., 1.5-15 microns, as measured by laser diffraction. Crosslinking of carboxylated polymers by transition metal compound particles is known and described for example in US 8,236,903 and US 2008/0255273. These prior art documents describe in particular nano particles, i.e. particles having submicron dimensions, which when thoroughly incorporated into the polymer matrix provide a large surface of contact for efficient crosslinking. The inventors were surprised when they found that non nano-scale particles could also be used to efficiently contribute to the crosslinking of carboxylated polyurethane dispersions. Particles having an average size of at least 1 micron are far less expensive and less problematic from an environmental point of view than the nanoparticles described in the literature. Moreover, such particles can themselves provide advantages with respect to solar reflectivity, especially in the case of zinc oxide. An amount of a solar-reflective crosslinking agent in an amount up to a described limit for the cross-linking agent is quantified as cross-linking agent. An amount in excess of the described limit is quantified as solar-reflective particles as described below.

As noted above, in one aspect of the disclosure the water-insoluble transition metal crosslinking agent is present in an amount in the range of 0.2-15 wt% of the aqueous coating composition. For example, in some embodiments of the present disclosure as described herein, the water-insoluble transition metal crosslinking agent is present in an amount in the range of 0.2-10 wt%, or 0.2-5 wt%, or 0.2-3 wt%, or 0.5-15 wt%, or 0.5-10 wt%, or 0.5-5 wt%, or 0.5-3 wt%, or 1-15 wt%, or 1-10 wt%, or 1-5 wt%, or 2-15 wt%, or 2-10 wt%, or 2-5 wt%, based on the total weight of the aqueous coating composition. The person of ordinary skill in the art will select relative amounts of functionalized anionic polyurethane, transition metal crosslinking agent, and hydrophobic acrylic polymer and/or near-infrared reflective colored pigment to provide desired coating liquid and material properties, based on the present disclosure.

As noted above, in another aspect of the disclosure the water-insoluble transition metal crosslinking agent is present in an amount in the range of 0.5-30 wt% of the aqueous coating composition on a dry solids basis. For example, in some embodiments of the present disclosure as described herein, the water-insoluble transition metal crosslinking agent is present in an amount in the range of 0.5-20 wt%, or 0.5-10 wt%, or 0.5-6 wt%, or 1-30 wt%, or 1-20 wt%, or 1-10 wt%, or 1-6 wt%, or 2-30 wt%, or 2-20 wt%, or 2-10 wt%, or 5-30 wt%, or 5-20 wt%, or 5-10 wt%, on a dry solids basis.

The person of ordinary skill in the art will select relative amounts of functionalized anionic polyurethane, transition metal crosslinking agent, and hydrophobic acrylic polymer and/or near-infrared reflective colored pigment to provide desired coating liquid and material properties, based on the present disclosure.

The person of ordinary skill in the art can select a weight ratio of functionalized anionic polyurethane to water-insoluble transition metal crosslinking agent that provides desirable crosslinking in the final dried coating. For example, in various embodiments as otherwise described herein, a weight ratio of water-insoluble transition metal crosslinking agent to functionalized anionic polyurethane is 0.01-0.4, e.g., in the range of 0.02-0.4, or 0.03-0.4, or 0.01-0.25, or 0.02-0.25, or 0.03-0.25, or 0.01-0.15, or 0.02-0.15, or 0.03-0.15.

The aqueous coating composition of the present invention also includes water. The relative amount of water can be tuned, for example, to provide a desired viscosity and solids concentration to provide a dried coating of a desired thickness. In various embodiments as otherwise described herein, water is present in an amount in the range of 30-95 wt% of the aqueous coating composition, e.g., 30-90 wt%, or 45-75 wt%, or 45-60 wt%, or 60-95 wt%, or 60-90 wt%, or 60-75 wt%. Of course, different amounts can be used in other embodiments, if a thicker or thinner coating is desired.

The functionalized anionic polyurethane and the water-insoluble transition metal crosslinking agent can be prepared and provided as a polyurethane dispersion, for example, present in an amount in the range of 40 wt% to 80 wt% of the composition and comprising the functionalized anionic polyurethane, the water-insoluble transition metal crosslinking agent, and water. The hydrophobic acrylic polymer and/or the near-infrared reflective colored pigment can be added thereto. A suitable polyurethane dispersion containing functionalized anionic polyurethane and the water-insoluble transition metal crosslinking agent is available from Maris Polymers as MARISEAL 400W.

As discussed above, in one aspect of the disclosure the coating composition also includes a hydrophobic acrylic polymer. The present inventors have found that use of a hydrophobic acrylic polymer, e.g., as a dispersion or emulsion, in the coating composition can provide a number of benefits.

A variety of hydrophobic acrylic polymers can be used. For example, many such polymers are identified as primers, i.e., materials that are provided on a surface as a pre-coat, in order to provide a surface to which another material can better adhere. Notably, the present inventors have found that instead of using these materials as primers for a polyurethane dispersion, mixing them with the polyurethane dispersion to provide certain of the formulations of the disclosure can provide even better results. The hydrophobic acrylic polymer is not particularly limited and can be selected based on the desired properties of the coating as described herein. In various embodiments as otherwise described herein, the hydrophobic acrylic polymer, when provided as a dry film at standard laboratory conditions, has a water contact angle of at least 65 degrees, e.g., at least 70 degrees, or at least 75 degrees, for example, in the range of 65-95 degrees, or 70-95 degrees, or 75-95 degrees. In some embodiments, the hydrophobic acrylic polymer has a glass transition temperature (measured via differential scanning calorimetry) of no more than 40 °C. In various embodiments, the hydrophobic acrylic polymer has a glass transition temperature (measured via differential scanning calorimetry) of no more than 30 °C, e.g., no more than 25 °C, for example, in the range of 5-30 °C, or 5-25 °C, or 10-30 °C, or 10-25 °C, or 20-40 °C. In various embodiments as otherwise described herein, the hydrophobic acrylic polymer is provided as a self-crosslinking dispersion that alone can form a film that is flexible at room temperature, for example, with a minimum film forming temperature in the range of 0-20 °C. Examples of hydrophobic acrylic polymers include those available in the products Mowlith LDM 7717, Mowlith LDM 1865 WP, Mowlith LDM 7728 (all Celanese), EPS 719 (Engineered Polymer Solutions), and Exodisp C 4362 (EOC), all provided as aqueous dispersions.

In some embodiments, a hydrophobic acrylic polymer is present in the aqueous coating composition in an amount in the range of 2 wt% to 55 wt%, based on the total weight of the composition. In various embodiments as otherwise described herein, a hydrophobic acrylic polymer is present in the aqueous coating composition in an amount in the range of 2 wt% to 40 wt%. For example, in various embodiments as otherwise described herein, the hydrophobic acrylic polymer is present in the aqueous coating composition an amount in the range of 2-35 wt%, or 2-30 wt%, or 2-25 wt%, or 2-20 wt%, or 2-15 wt%, or 2-10 wt%, or 5-40 wt%, or 5-35 wt%, or 5-30 wt%, or 5-25 wt%, or 5-20 wt%, or 5-15 wt%, or 10-40 wt%, or 10-35 wt%, or 10-30 wt%, or 10-25 wt%, or 10-20 wt%, or 15-40 wt%, or 15-35 wt%, or 15-30 wt%, or 15-25 wt%, or 20-40 wt%, or 20-35 wt%, or 20-30 wt%, or 25-40 wt%, or 25-35 wt%, or 30-40 wt%, based on the total weight of the composition. In some embodiments, the hydrophobic acrylic polymer may be present in the aqueous coating composition an amount in the range of 5-55 wt%, or 5-40 wt%, or 10-55 wt%, or 10-40 wt%, or 15-55 wt%, or 15-40 wt%, or 20-55 wt%, or 20-40 wt%, or 20-35 wt%, or 20-30 wt%, or 25-55 wt%, or 25-40 wt%, or 30-55 wt%, or 30-40 wt%, or 35-55 wt%, or 40-55 wt%, based on the total weight of the composition.

As noted above, in another aspect, the aqueous coating composition includes 20-80 wt% hydrophobic acrylic polymer on a dry solids basis. For example, in various embodiments as otherwise described herein, the aqueous coating composition includes 20-70 wt%, or 20-60 wt%, or 20-50 wt%, or 20-40 wt%, or 20-30 wt%, or 30-80 wt%, or 30-70 wt%, or 30-60 wt%, or 30-50 wt%, or 30-40 wt%, or 40-80 wt%, or 40-70 wt%, or 40-60 wt%, or 40-50 wt%, or 50-80 wt%, or 50-70 wt%, or 50-60 wt% hydrophobic acrylic polymer on a dry solids basis.

The person of ordinary skill in the art will select relative amounts of hydrophobic acrylic polymer, together with other components, to provide desired coating liquid and material properties based on the present disclosure.

Hydrophobic acrylic polymers can be provided as emulsions or dispersions. Examples include MOWLITH 7728 (Celanese) and acrylic primers from EOC Group. Water provided with this emulsion or dispersion must be accounted for when calculating final water content of the aqueous coating composition. The hydrophilic acrylic polymer can, for example, be provided as an emulsion or dispersion in an amount in the range of 10-60 wt% of the total weight of the aqueous coating composition, for example, e.g., 10-50 wt%, or 10-40 wt%, or 10-30 wt%, or 10-20 wt%, or 20-60 wt%, or 20-50 wt%, or 20-40 wt%, or 20-30 wt%, or 30-60 wt%, or 30-50 wt%, or 30-40 wt%, or 40-60 wt%, or 40-50 wt%, or 50-60 wt%, based on the total weight of the composition. In various embodiments, the emulsion or dispersion of the hydrophobic acrylic polymer has viscosity in the range of 1000 to 3000 mPa·s. For example, in some embodiments of the present disclosure as described herein, the emulsion or dispersion of hydrophobic acrylic polymer has viscosity in the range of 1000-2500 mPa·s, or 1000-2000 mPa·s, or 1500-3000 mPa·s, or 1500-2500 mPa·s, or 2000-3000 mPa·s. In various embodiments of the present disclosure as described herein, the emulsion or dispersion of the hydrophobic acrylic polymer has a pH in the range of 5 to 8, e.g., in the range of 7 to 8.

As described above, in various embodiments as otherwise described herein, the aqueous coating composition includes a near-infrared reflective colored pigment. This can be present together with a hydrophobic acrylic polymer, or alternatively in the absence of a hydrophilic acrylic polymer.

In various embodiments, the near-infrared reflective colored pigment is present in an amount of at least 0.05 wt%, e.g., in the range of 0.0.05 wt% to 5 wt%, based on the total weight of the composition. For example, in some embodiments, the near-infrared reflective colored pigment is present in an amount of at least 0.1 wt%, or at least 2 wt% based on the total weight of the composition. In some embodiments, the near-infrared reflective colored pigment is present in an amount in the range of 0.05-3 wt%, or 0.05-2 wt%, or 0.05-1 wt%, or 0.1-5 wt%, or 0.1-3 wt%, or 0.1-2 wt%, or 0.1-1 wt%, or 0.2-5 wt%, or 0.2-3 wt%, or 0.2-2 wt%, or 0.2-1 wt%, based on the total weight of the composition.

In various embodiments, the near-infrared reflective colored pigment is present in an amount of at least 0.1 wt%, e.g., in the range of 0.1-10 wt%, on a dry solids basis. For example, in some embodiments, the near-infrared reflective colored pigment is present in an amount of at least 0.2 wt%, or at least 0.5 wt%, on a dry solids basis. In some embodiments, the near-infrared reflective colored pigment is present in an amount in the range of 0.1-6 wt%, or 0.1-4 wt%, or 0.1-2 wt%, or 0.2-10 wt%, or 0.2-6 wt%, or 0.2-4 wt%, or 0.2-2 wt%, or 0.5-10 wt%, or 0.5-6 wt%, or 0.5-4 wt%, or 0.5-2 wt%, on a dry solids basis.

The near-infrared reflective colored pigment is not particularly limited and can be selected from any near-infrared reflective colored pigment known to those skilled in the art. As used herein, a near-infrared reflective colored pigment is colored, in that when measured on the CIELAB color space the pigment has a* and/or b* values of at least 30, e.g., at least 45, or at least 60. Pigments with yellow, orange, or red as the base color (i.e., as they appear to an observer) are preferred. For example, in various embodiments as otherwise described herein, the near-infrared reflective colored pigment is a yellow pigment, an orange pigment, or a yellow-orange pigment. In some embodiments, the near-infrared reflective colored pigment is a red pigment or a red-orange pigment, or a combination thereof. In various embodiments as otherwise described herein, the near-infrared reflective colored pigment is a mixed metal oxide, e.g., an oxide of tin, titanium and zinc.

The near-infrared reflective colored pigment is also reflective of near-infrared radiation, as measured by a reflectivity in the 700-1500 nm wavelength range of at least 50% (on an energy basis), e.g., at least 60% or even at least 70%.

The near-infrared reflective colored pigment desirably has a total solar reflectivity of at least 50%.

Suitable near-infrared reflective colored pigments include those available under the SOLARPLEX tradename, including, e.g., catalog numbers 34H001R (Yellow, total solar reflectance=67%); 34H1002 (Mid Shade, TSR=54); 34H1003 (Orange, TSR=51); 34H1004 (Bright Orange, TSR=54). But the person of ordinary skill in the art will appreciate that there are a variety of other so-called "cool" pigments are suitable for use.

As the person of ordinary skill in the art will appreciate, a variety of other components can be present in the aqueous coating composition. For example, in various embodiments of the present disclosure as described herein, the composition further comprises solar-reflective particles (i.e., other than the near-infrared reflective colored pigment, if present). In various embodiments as otherwise described herein, the reflective particles are present in an amount in the range of 1 wt% to 15 wt%, based on the total weight of the composition. For example, in some embodiments of the present disclosure as described herein, the reflective particles are present in an amount in the range of 1-12 wt%, or 1-10 wt%, or 1-8 wt%, or 1-5 wt%, or 2-15 wt%, or 2-12 wt%, or 2-10 wt%, or 2-8 wt%, or 2-5 wt%, or 5-15 wt%, or 5-12 wt%, or 5-10 wt%, or 7-15 wt%, or 7-12 wt%, or 10-15 wt%, based on the total weight of the composition. In various embodiments, the reflective particles are present in an amount in the range of 2-30 wt% on a dry solids basis. For example, in some embodiments of the present disclosure as described herein, the reflective particles are present in an amount in the range of 2-25 wt%, or 2-20 wt%, or 2-15 wt%, or 2-10 wt%, or 5-30 wt%, or 5-25 wt%, or 5-20 wt%, or 5-15 wt%, or 5-10 wt%, or 10-30 wt%, or 10-25 wt%, or 10-20 wt%, or 15-30 wt%, or 15-25 wt%, or 20-30 wt%, on a dry solids basis. A variety of solar-reflective particles can be used, generally selected any solar-reflective particle as known to those skilled in the art. For example, in various embodiments of the present disclosure, the reflective particles one or more of titanium dioxide, aluminum oxide, iron oxide, zinc oxide, and combinations thereof. In particular embodiments, the reflective particles are titanium oxide.

In various embodiments as otherwise described herein, the coating further comprises a mineral filler. For example, in some embodiments, the mineral filler is present in in the aqueous coating composition in an amount in the range of 0.5-30 wt% (e.g. in the range of 0.5-20 wt%, or 0.5-15 wt%, or 0.5-10 wt%, or 2-30 wt%, or 2-20 wt%, or 2-15 wt%, or 2-10 wt%, or 5-30 wt%, or 5-20 wt%, or 5-15 wt%, or 10-30 wt%, or 10-20 wt%, or 15-30 wt%), based on the total weight of the composition. In some embodiments of the present disclosure as described herein, the mineral filler is present in an amount in the range of 1-60 wt% (e.g. in the range of 1-40 wt%, or 1-30 wt%, or 1-20 wt%, or 5-60 wt%, or 5-40 wt%, or 5-30 wt%, or 5-20 wt%, or 10-60 wt%, or 10-40 wt%, or 10-30 wt%, or 20-60 wt%, or 20-40 wt%, or 30-60 wt%), on a dry solids basis. The mineral filler is not particularly limited and can be selected based on the desired properties of the coating as described herein. For example, the filler may be independently selected from the group consisting of calcium carbonate, barium sulfate, clay, talcum, dolomite, mica, sand, silica, aluminum oxide, crushed basalt, kaolin, and calcined kaolin. In particular embodiments, the filler is calcium carbonate.

It is desirable to efficiently disperse the crosslinking particles and any other inorganic materials (e.g., near-infrared reflective colored pigments, solar-reflective particles, fillers) and to stabilize the dispersion so that the particles do not settle during storage. Accordingly, it can be desirable to include a dispersant in the aqueous coating compositions of the disclosure. For example, the dispersant may be a surfactant and preferably is a nonionic surfactant. In various embodiments as otherwise described herein, the dispersant is present in an amount in the range of up to 10 wt%, based on the dry weight of the composition (i.e., on a dry solids basis). For example, in various embodiments, the dispersant is present in an amount in the range of up to 5 wt%, e.g., up to 2 wt%, or up to 1 wt%, or 0.05-5 wt%, or 0.05-2 wt%, or 0.05-1 wt%, or 0.05-0.5 wt%, or 0.1-5 wt%, or 0.1-2 wt%, or 0.1-1 wt%, or 0.1-0.5 wt%, based on the dry weight of the composition.

A thickening agent can also or alternatively be used to stabilize the composition. Moreover, a thickening agent can help provide a desirable viscosity for processing, and especially can help to provide for desirably thixotropic behavior of the aqueous coating composition. The thickening agent is not particularly limited and can be selected based on the desired properties of the coating as described herein. For example, the thickening agent may be a water soluble organic polymer such as cellulose derivatives, salts of poly(acrylic acid) and copolymers thereof, xanthan gum, and poly(vinyl alcohol), and nonionic polyurethane associative thickeners. For example, the thickening agent may be selected from Tafigel^{®} PUR 85, Tafigel^{®} PUR 43, or Tafigel^{®} AP15. In various embodiments of the present disclosure as described herein, the thickening agent is present in an amount of 0.1-2 wt%, or 0.1-1.5 wt%, or 0.1-1.0 wt%, or 0.5-2 wt%, or 0.5-1.5 wt%, or 0.5-1 wt%, based on the dry weight of the composition. The total amount of dispersant and thickening agent is, in certain desirable embodiments, no more than 10 wt% of the dry weight (e.g., no more than 8 wt% or no more than 5 wt%) of the dry weight of the aqueous coating composition.

In certain embodiments of the present disclosure as described herein, the composition further includes a coalescing agent. The coalescing agent is not particularly limited and can be selected based on the desired properties of the coating as described herein. For example, in some embodiments the coalescing agent may be propylene glycol phenyl ether, ethylene glycol, Texanol, or a modified urea. In particular embodiments, the coalescing agent is a modified urea. If present, the coalescing agent can be present, for example, in an amount in the range of 1-15 wt% (e.g. in the range of 1-10 wt%, or 1-7 wt%, or 1-5 wt%, or 2-15 wt%, or 2-10 wt%, or 2-7 wt%, or 5-15 wt%, or 5-10 wt%, or 10-15 wt%), based on the dry weight of the composition.

In some embodiments, the composition comprises a functionalized anionic polyurethane in an amount in the range of 10-30 wt% of the composition on a dry solids basis, a water-insoluble transition metal crosslinking agent (such as ZnO) present in an amount in the range of 0.5-5 wt% of the composition on a dry solids basis; and a hydrophobic acrylic polymer present in an amount in the range of 30-50 wt% on a dry solids basis. In this embodiment, the composition may further comprise one or several mineral fillers (such as calcium carbonate) in an amount in the range of 2-10 wt% on a dry solids basis and/or titanium dioxide particles in an amount in the range of 20-40 wt% on a dry solids basis. Preferably, the hydrophobic acrylic polymer has a glass transition temperature (measured via differential scanning calorimetry) in the range of 25-40°C.

In various embodiments of the present disclosure, the coating composition has a viscosity in the range of 7.5-40 mPa-s. As noted above, the person of ordinary skill in the art can provide a desired viscosity along with other rheological properties to provide an aqueous coating composition that is dispensable using any desired method, and to provide a dried coating of a desired thickness.

Another aspect of the disclosure is a coated surface comprising a substrate having a layer of an aqueous coating composition as described herein. The person of ordinary skill in the art can use any desirable method to make a coated surface. For example, a layer of aqueous coating composition can be provided on a desired substrate by spray coating, brush coating or roll coating of a coating composition as described herein. Such methods are generally suitable for field application, e.g., on a surface of a building or some other structure desired to be coated. When the coating is to be applied in a factory setting, other methods, such as curtain coating, can be used. In various embodiments, the layer of coating composition has a thickness in the range of 25 to 600 µm (e.g. in the range of 25 to 400 µm, or 25 to 200 µm, or 50 to 600 µm, or 50 to 400 µm, or 50 to 200 µm, or 75 to 600 µm, or 75 to 400 µm, or 75 to 300 µm). As described herein, such a coating composition can be dried to provide a coating, e.g., a solar reflective coating.

Another aspect of the disclosure is a solar reflective coating that is a coated dried product of a coating composition as described herein.

Another aspect of the disclosure is a solar reflective coating that comprises
a functionalized anionic polyurethane present in an amount in the range of 10-80 wt%, preferably 20-80 wt% of the composition on a dry solids basis;
a water-insoluble transition metal crosslinking agent present in an amount in the range of 0.5-30 wt% of the composition on a dry solids basis;
at least one of:
   a hydrophobic acrylic polymer present in an amount in the range of 20 wt% to 80 wt% on a dry solids basis, and
   a near-infrared reflective colored pigment present in an amount of at least 0.2 wt%, e.g., in the range of 0.2 wt% to 10 wt% on a dry solids basis.

The solar reflective coatings of the disclosure can include a variety of amounts of component materials. The dry weight percentages described above with reference to the aqueous coating compositions also apply to the solar reflective coatings of the disclosure.

As described above, the solar-reflective coatings of the disclosure (e.g., suitable for use in cool roofing systems) can be characterized by their reflective properties. Such reflective properties for materials described herein are quantified by measuring the solar reflectance and thermal emittance of such coating and calculating the solar reflective index (SRI). The SRI is a measure of the coating's ability to reject solar heat and combines the direct solar reflectance (SR) and thermal emittance (TE) values into a single value following the standard ASTM E1980-11. In some embodiments of the present disclosure, the coating composition has a solar reflectance (SR) of at least 70%, e.g., at least 75%, or at least 80%, or at least 85%. In other embodiments of the present disclosure, the coating composition has a solar reflectance (SR) in the range of 70-95% (e.g., in the range of 70-90%, or 70-85%, or 70-80%, or 75-95%, or 75-90%, or 75-85%, or 80-95%, or 80-90%, or 85-95%). In some embodiments of the present disclosure as described herein, the coating composition has a thermal emittance (TE) of at least 80%, e.g., at least 85%, or at least 90%. In certain embodiments of the disclosure as described herein, the coating composition has a thermal emittance (TE) in the range of 80-100% (e.g., in the range of 80-95%, or 80-95%, or 85-100%, or 85-95%, or 90-100%, or 90-95%). In some embodiments of the present disclosure as described herein, the coating composition as a solar reflectance index (SRI) of at least 90 (e.g., of at least 95, or at least 100). For example, in some embodiments, the coating composition has a SRI in the range of 90-120, e.g., in the range of 90-110, or 90-105, or 90-100, or 95-120, or 95-110, or 95-105, or 100-120, or 100-110.

Reflectance properties are obtained using Perkin Elmer's LAMBDA 900/950 spectrophotometers, which measure the reflectance or transmission of light in the UV, UV-visible, and near-infrared (length range wave: 175 nm - 3,300 nm). A solar spectrophotometer illuminates a surface with monochromatic light at near-normal incidence and measures light reflected into an integrating sphere. A series of such measurements at wavelengths spanning the solar spectrum (300 - 2500 nm) yields the surface's near-normal beam-hemispherical solar spectral reflectance rb,nn(λ). While wavelength spacing is arbitrary, we find measuring solar spectral reflectance at a 5 nm interval sufficient to capture the spectral details of most surfaces. See generally R. Levinson et al., "Measuring solar reflectance Part II: Review of practical methods," available at https://www.osti.gov/servlets/purl/984959.

In some embodiments of the present disclosure, the coating is produced by a process comprising drying the coating composition as described herein on a surface of a substrate. Application of the coating composition is not particularly limited and can be applied by any method as known by those in the art. For example, the coating composition can be applied by spray coating, roll coating, brush coating or curtain coating of the composition on the substrate. In some embodiments, the coating composition is sprayed onto the substrate.

The aqueous coating composition can be allowed to dry to provide the coating. While simply allowing the layer of aqueous coating composition to dry in ambient conditions will typically be sufficient, the person of ordinary skill in the art will appreciate that in some embodiments heat or airflow can be provided to dry the coating.

After drying the applied coating composition as described herein, a coating is formed on the substrate. The coating can be provided with a variety of coverage rates. In some embodiments of the present disclosure as described herein, the coating has a dry coverage rate in the range of 100-2000 g/m², e.g., in the range of 200-2000 g/m², or 400-2000 g/m², or 600-2000 g/m², or 100-1000 g/m², or 200-1000 g/m², or 400-1000 g/m², or 100-500 g/m², or 200-500 g/m². In various embodiments (including various of the ranges described above), the coating has a dry coverage rate of less than 350 g/m², e.g., in the range of 100-350 g/m² (e.g., in the range of 150-350 g/m², or 200-350 g/m², or 100-300 g/m², or 150-300 g/m², or 200-300 g/m²).

Similarly, the coating can be provided with a variety of thicknesses. In some embodiments of the present disclosure, the coating has a thickness in the range of 25 to 2000 µm, e.g., 50-2000 µm, or 100-2000 µm, or 250-2000 µm, or 500- 2000 µm, or 1000-2000 µm, or 25-1000 µm, or 50-1000 µm, or 100-2000 µm, or 250-2000 µm, or 500-1000 µm. In some embodiments of the present disclosure, the coating has a thickness in the range of 25 to 300 µm. For example, in some embodiments, the film has a thickness in the range of 25 to 200 µm, or 25 to 100 µm, or 50 to 300 µm, or 50 to 200 µm, or 50 to 100 µm, or 75 to 300 µm, or 75 to 200 µm, or 75 to 150 µm.

Another aspect of the present disclosure provides a coated substrate comprising a substrate having a solar-reflective coating as described herein disposed thereon.

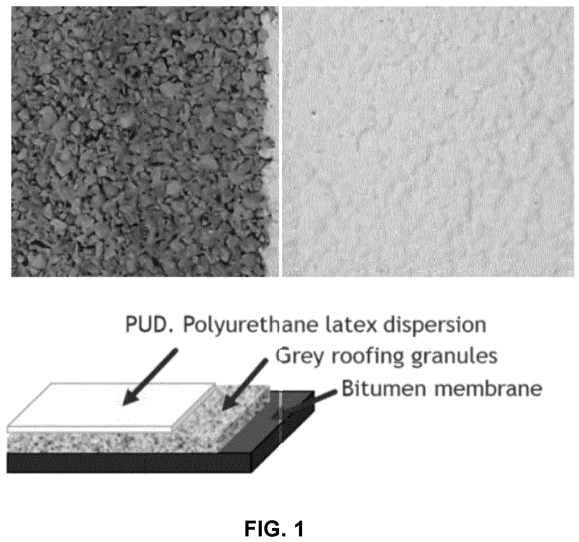

Another aspect of the disclosure is a roofing material comprising a roofing product (e.g., as a "substrate"); and a solar reflective coating as described herein disposed on top of the roofing product. FIG. 1 depicts such a roofing product as described herein, here, in which the roofing product is a bituminous membrane having roofing granules disposed thereon. But the person of ordinary skill in the art will appreciate that a wide variety of other substrates, including other roofing products and other building materials, can be suitably coated with the coatings described herein.

For example, in various embodiments as otherwise described herein, the roofing product is a roofing membrane. The roofing membrane can in some embodiments be a bituminous membrane, e.g., having a bituminous substrate having a top surface and roofing granules adhered to the top surface of the bituminous substrate. In other embodiments, the roofing membrane is a thermoplastic membrane.

In other embodiments as otherwise described herein, the roofing product is a roofing shingle, e.g., having a having a bituminous substrate having a top surface and roofing granules adhered to the top surface of the bituminous substrate.

Bituminous roofing products can be made by any means as known in the art. For example, in certain embodiments as otherwise described herein, the substrate has a top surface and a bottom surface, having a bituminous composition disposed thereon. The substrate can also be porous. As the person of ordinary skill in the art will appreciate, the bituminous composition can be coated on both surfaces of, or even saturate, the substrate. A variety of materials can be used as the substrate, for example, conventional bituminous shingle or membrane substrates such as roofing felt or fiberglass. The bituminous composition also has a top surface. A plurality of roofing granules is adhered on the top surface of the shingle (e.g., the top surface of the bituminous composition), such that the roofing granules substantially coat the bituminous composition in a region thereof. The region can be, for example, the exposure zone of a roofing shingle, or a region that is otherwise to be exposed when the roofing product is installed on a roof. The roofing granules are desirably embedded somewhat in the bituminous composition to provide for a high degree of adhesion. As the person of ordinary skill in the art will appreciate, other granular or particulate material can coat the bituminous composition in regions that will not be exposed, e.g., on a bottom surface of the roofing shingle, or in a headlap zone of a top surface of the roofing shingle, as is conventional. The plurality of roofing granules is not particularly limited and can be selected from any roofing granules known to those in the art. For example, the plurality of roofing granules may include water-resistant roofing granules, algae-resistant roofing granules, or solar reflective roofing granules.

As described above, the reflective properties of roofing materials are important in characterizing such products for use in cool roofing systems. As with the coating composition, the roofing product can be characterized by its SR, TE, and SRI. In some embodiments of the present disclosure as described herein, the roofing product has a solar reflectance (SR) of at least 70%, e.g., at least 75%, or at least 80%, or at least 85%. In other embodiments of the present disclosure, the roofing product has a solar reflectance (SR) in the range of 70-95% (e.g., in the range of 70-90%, or 70-85%, or 70-80%, or 75-95%, or 75-90%, or 75-85%, or 80-95%, or 80-90%, or 85-95%). In some embodiments of the present disclosure as described herein, the roofing product has a thermal emittance (TE) of at least 80%, e.g., at least 85%, or at least 90%. In certain embodiments of the disclosure as described herein, the roofing product has a thermal emittance (TE) in the range of 80-100% (e.g., in the range of 80-95%, or 80-95%, or 85-100%, or 85-95%, or 90-100%, or 90-95%). In some embodiments of the present disclosure as described herein, the roofing product as a solar reflectance index (SRI) of at least 90 (e.g., of at least 95, or at least 100). For example, in some embodiments, the roofing product as a SRI in the range of 90-120, e.g., in the range of 90-110, or 90-105, or 90-100, or 95-120, or 95-110, or 95-105, or 100-120, or 100-110.

Notably, the roofing materials of the disclosure can have good solar reflection performance without using conventional solar reflective roofing products. For example, in various embodiments as otherwise described herein, a roofing product has a solar reflectance no more than 60, e.g., no more than 50, or no more than 40. In various embodiments, the roofing product has a solar reflectance no more than 30, e.g., no more than 25, or no more than 20, or no more than 15.

In various embodiments, the roofing product includes a bituminous substrate and roofing granules adhered to a top surface of the bituminous substrate, e.g., as a bituminous roofing membrane or a bituminous roofing shingle. Notably, non-solar-reflective granules can be used. In various such embodiments, the roofing granules have a solar reflectance no more than 60, e.g., no more than 50, or no more than 40, or no more than 30, or no more than 25, or no more than 20, or no more than 15.

Moreover, in various embodiments, the roofing granules can be generally grey in color. For example, in some embodiments, the roofing granules have a* and b* values on the CIELAB color space of no more than 30 in absolute value, e.g., no more than 20 in absolute value, or no more than 10 in absolute value.

Another aspect of the disclosure is a solar-reflective roof comprising a roof deck and a roofing material as described herein disposed thereon. For example, in some embodiments, the roofing material is a roofing membrane. In other embodiments, the roofing material is a roofing shingle, e.g., provided as an array of overlapping shingles.

Roofing materials can be provided with the coatings of the disclosure in a variety of manners. In various embodiments, the coatings can be applied in a manufacturing plant, then the roofing materials can be packaged and delivered to a job site for installation. However, in other embodiments, the coatings can be applied after the roofing product is installed on a roof. For example, the coatings can be applied shortly after the roofing product is installed, e.g., within a week or within a month. However, the coatings can alternatively be applied to retrofit a roof, e.g., after the roofing product has been on the roof for some time, e.g., at least a year or even at least two years. This can provide existing roofs with a measure of solar-reflectivity in a convenient manner.

The coatings described herein can be used on a variety of substrates other than roofing products. They can be coated directly on a wide variety of surfaces, e.g., concrete, brick, wood, plastic such as PVC, metals such as steel, fiberglass composites. For example, the coatings can be used on a variety of building surfaces other than roofing products. For example, in various embodiments, a building includes a solar-reflective surface having a building surface, such as a roof, a terrace or a balcony, having a coating of the disclosure formed thereon. The building surface can be formed of a variety of materials, e.g., a roofing product as described herein (for instance, a roofing membrane or a roofing shingle), but alternatively a material such as those described above. For example, building surfaces made of concrete, brick, wood, metal such as steel, plastic such as PVC, or fiberglass composite can be coated with the coatings of the disclosure. The coatings can themselves provide water protection, especially when provided in relatively thick layers, e.g., at least 700 microns or at least 1000 microns. The coatings can be coated in a single application or through the buildup of multiple layers (e.g., with at least partial drying between applications). The coating can be directly on the building surface, or there may be other materials disposed between the building surface and the coating of the disclosure, such as primers. Desirably, the coating of the disclosure is an outermost layer.

### EXAMPLES

The Examples that follow are illustrative of specific embodiments of the coating composition and roofing product of the disclosure, and various uses thereof. They are set forth for explanatory purposes only, and are not to be taken as limiting the scope of the disclosure.

### Example 1. Effect of Coverage Rate with Comparative PUD Coatings

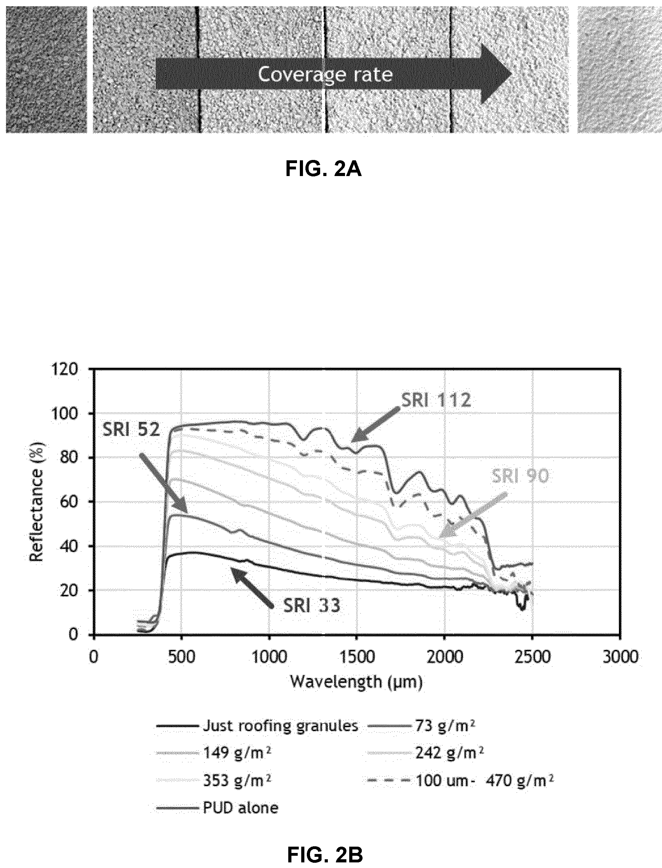

As would be understood by the person of ordinary skill in the art, the amount of a coating as described herein applied to a roofing product can be controlled to reach a desired solar reflectance. However, the more material applied, the more costly the roofing product becomes. As such, the coverage rate of the coating is a main parameter of interest to help decrease cost without sacrificing performance. The effect of the coverage rate is illustrated using an aqueous polyurethane dispersion (PUD) having a PU content of 50-60%, based on a polyurethane similar to that generally described in Example 1 of WO 2021/074134. The material included titanium dioxide. FIG. 2A provides pictures of the samples tested and FIG. 2B plots the reflectance (%) as a function of wavelength for conventional PUD roofing products. To form the PUD roofing product samples, the PUD was sprayed at a pressure of 2.5 bars onto a substrate coated with a bitumen composition and topped with roofing granules. The distance between the spray nozzle and roofing product was between 20-30 cm and a nozzle size of 17 mm was used. For the PUD coating tested here, a coverage rate of greater than 300 g/m² is needed to achieve the desired standards for solar reflectance index of greater than 85.

### Example 2. Aging Tests of Roofing Products Coated with Comparative PUD Coatings

### ASTM D7897.18

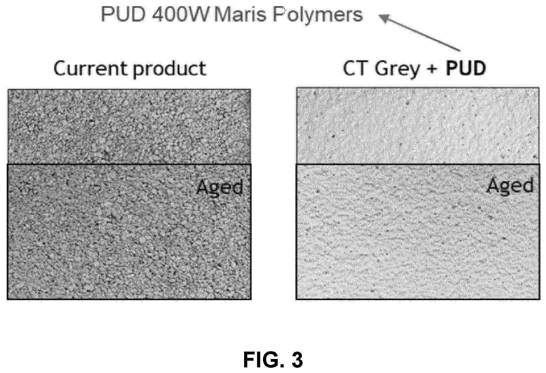

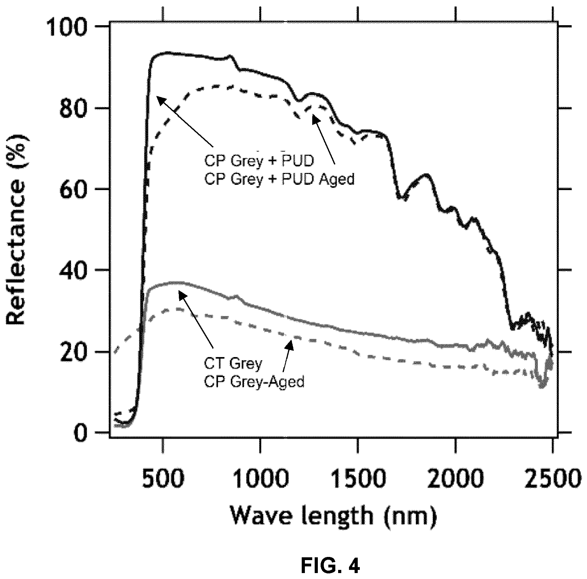

Another concern with roofing materials is the effect of weather exposure on the aesthetic of the roof. To simulate exposure to the elements, ASTM D7897.18 simulates the effects of 3 years of environmental exposure on the solar reflectance and thermal emittance performance of samples using in-lab soiling and weathering techniques. The test involves a simulated field exposure protocol that consists of spraying an aqueous mixture of soot and other soluble soiling constituents, including salts and organic matter, onto a sample of the coated roofing product. The sample is exposed in a weathering apparatus before soiling, to provide UV conditioning; and after soiling, to simulate the cleaning effect of moisture. These tests successfully mimic the natural exposure of 3 years in 3 days. FIG. 3 is a picture of roofing products with and without the PUD coating described above, both before and after the aging test according to ASTM D7897.18 was conducted. For both samples, some yellowing is present. The SRI for both samples were measured before and after the aging test, the results of which are shown in FIG. 4. For both samples, the SRI after aging drops by approximately 5%.

### Thermal Aging

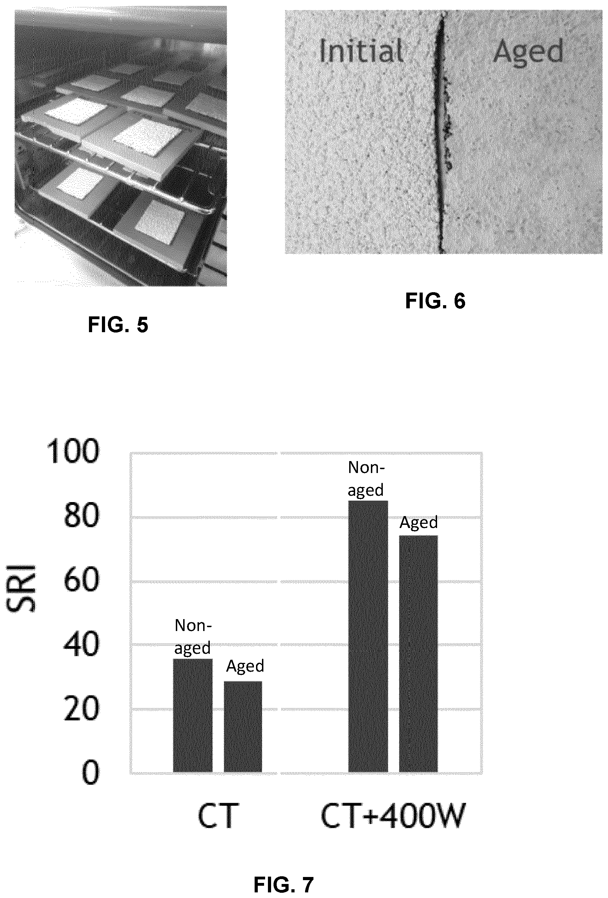

Thermal aging tests were also conducted on roofing products with the PUD coatings described above applied thereon. The thermal aging test consists of leaving roofing products coated with the PUD dispersion inside an oven for 9 days at 70°C at 50% relative humidity. This test showed evidence of bitumen diffusion at high temperature on the white PUD coating. This evidence is showed by either a strong yellowing or a strong decrease in solar reflectance properties. FIG. 5 shows a picture of the thermal aging test for roofing product coated with PUD, FIG. 6 shows a picture of a PUD sample before and after the thermal aging test, and FIG. 7 shows a bar graph of the results of the SRI before and after the thermal aging test for roofing products coated with and without a conventional PUD coating.

### Example 3. Compositions and Performance of PUD Coating with Hydrophobic Acrylic Polymer

To overcome the yellowing of the comparative PUD white coating discussed above, the present inventors have found that inclusion of a hydrophobic acrylic polymer in a PUD coating to be highly effective. The hydrophobic acrylic polymer was mixed with the PUD in varying amounts. The compositions tested are reported in Table 1.

**Table 1.**

| Composition Name | PUD 9 (Maris Polymers) (wt%) | Mowlitith 7728 (Celanese) (wt%) | Acrylic primer (EOC) (wt%) | TiO₂ (Chemours) (wt%) | ZnO (wt%) | CaCO₃ (Imerys) (wt%) |
|---|---|---|---|---|---|---|
| Hybrid 0 | 100 | 0 | 0 | 21 | 1 | 0 |
| Hybrid 1 | 70 | 0 | 30 | 13-21 | 1 | 3-6 |
| Hybrid 2 | 60 | 0 | 40 | 13-21 | 1 | 3-6 |
| Hybrid 3 | 50 | 0 | 50 | 13-21 | 1 | 3-6 |
| Hybrid 4 | 50 | 50 | 0 | 13-21 | 1 | 3-6 |

PUD9 is a 50-60 wt% dispersion of a functionalized anionic polyurethane as described herein. Mowlith 7728 has a solids content of 48 wt%, and when cast into a film provides a material with a Tg of 22 °C. The EOC acrylic primer was Exodisp C 4362. TiO₂ was TiPure 706 from Chemours having a d50 particle size in the range of 0.2-0.4 microns. CaCO₃ was ImerSeal^{®} 96S from Imerys, having a d50 particle size of 0.4 microns. Formulations also included about 0.5 wt% (based on total formulation weight) Dispex^{®} CX 4231 as a dispersant; about 0.3 wt% (based on total formulation weight) FOAMSTAR^{®} SI 2210 as an anti-foam; and about 0.6 wt% (based on total formulation weight) of TAGIFEL AP16 as a thickener.

### Performance of Free Standing Films

Each of the specific compositions were then coated on a Teflon surface at 1.5 mm wet thickness and dried. Once dried, the solar reflectance (SR), thermal emittance (TE), and SRI (see ASTM E1980-11) values of the different films were measured. Table 2 shows the results of these measurements.

**Table 2.**

| Composition No. | Description Binder + Additives | SR (%) | TE (%) | SRI |
|---|---|---|---|---|
| 57-h free films | Hybrid 0 | 88.3 | 89.0 | 112 |
| 94 free films | Hybrid 1 | 87.3 | 90.0 | 110 |
| 95 free films | Hybrid 2 | 88.0 | 90.0 | 111 |
| 97 free films | Hybrid 4 | 87.7 | 88.0 | 111 |
| 100 free films | Hybrid 2 + 8g of TiO₂ | 84.2 | 94.8 | 107 |

By adding the hydrophobic acrylic polymer to the compositions, the SRI does not decrease.

### Performance on Roofing Products

The compositions outlined in Table 1 were then disposed of roofing products at different coverage rates. The solar reflectance, thermal emittance, and SRI were then measured before and after either a thermal aging (TA) test (1 week at 70 °C) or a standard aging (ASTM D7897.18) test, as described above. The results of these measurements are shown in Table 3.

**Table 3.**

| Composition No. | Test | Description Binder + Additives | Dry Rate Coverage (g/m²) | SR (%) | TE (%) | SRI |
|---|---|---|---|---|---|---|
| 57 | Before | Hybrid 0 + 5% CaCO₃ | 248 | 75.6 | 93.0 | 94 |
| 57 | TA | Hybrid 0 + 5% CaCO₃ | 284 | 70.8 | 88.0 | 87 |
| 94 | Before | Hybrid 1 | 204 | 60.0 | 88.0 | 71 |
| 94 | TA | Hybrid 1 | 217 | 53.1 | 88.0 | 71 |
| 94 | ASTM D7897.18 | Hybrid 1 | 204 | 56.3 | 88.0 | 66 |
| 95 | Before | Hybrid 2 | 165 | 70.4 | 88.0 | 86 |
| 95 | TA | Hybrid 2 | 210 | 66.2 | 92.7 | 81 |
| 95 | ASTM D7897.18 | Hybrid 2 | 165 | 64.9 | 88.0 | 78 |
| 97 - Thin | Before | Hybrid 4 | 213 | 69.1 | 95.3 | 86 |
| 97 - Thin | TA | Hybrid 4 | 204 | 66.8 | 93.0 | 82 |
| 97 - Thick | Before | Hybrid 4 | 320 | 71.6 | 93.4 | 89 |
| 97 -Thick | TA | Hybrid 4 | 305 | 65.6 | 92.7 | 80 |
| 100 | Before | 100g Hybrid 2 + 8g of TiO₂ | 416 | 54.5 | 94.0 | 66 |
| 100 | TA | 100g Hybrid 2 + 8g of TiO₂ | 371 | 49.4 | 91.8 | 58 |

Composition 57 fulfills the requirements of a SRI higher than 85 after thermal aging. Moreover, with more hydrophobic acrylic polymer in the composition, the roofing product maintains its initial SRI, even after aging.

Furthermore, the results of composition 97 are very encouraging because these samples remained totally white after aging, although they still lose some SRI value.

### PUD Binder on Top of Acrylic Polymer Layer

To further investigate the effects of the hydrophobic acrylic polymer, a first layer of the hydrophobic acrylic polymer is applied on top of the roofing products and dried, and then a commercial PUD (400W, from Maris Polymers) is applied and dried. The results of these formulations are shown in Table 4A.

**Table 4A.**

| Formulation No. | Test | Description Binder + Additives | Dry Coverage Rate (g/m²) | SR (%) | TE (%) | SRI |
|---|---|---|---|---|---|---|
| 84 | Before | First layer: Acrylic Primer | 33 (primer) + 147 (400W) | 70.4 | 88.0 | 86 |
| 85 | Before | Second layer: Maris 400W | 12 (primer) + 142 (400W) | 72.6 | 88.0 | 89 |
| 86 | Before | Technique: Spray coating | 13 (primer) + 166 (400W) | 72.1 | 88.0 | 88 |
| 93 | Before | First layer: Acrylic Primer | 32 (primer) + 260 (400W) | 59.9 | 94.1 | 73 |
| 93 | Aged* | Second layer: Maris 400W | 33 (primer) + 229 (400W) | 62.3 | 92.5 | 76 |
| 93 | Aged* | Technique: Roll coating | 23 (primer) + 97 (400W) | 62.8 | 88.0 | 75 |

| | | | | | | |
|---|---|---|---|---|---|---|
| *7 days at 70 °C. | | | | | | |

Another formulation is shown in Table 4B, below, with the times in the left column indicating that the first set of components was mixed for 5 minutes, then the second set of components were added and the mixture mixed for 5 minutes, then the third set of documents was provided and the mixture mixed for another 5 minutes.

**Table 4B**

| | | Weight% |
|---|---|---|
| 5 min | Water DI | 11.4% |
| | Dispersant CX4231 | 0.8% |
| | Anti-foam SI2210 | 0.4% |
| | Ti02 TiPure | 5.4% |
| | BaSO4 BlancFix 0.7um | 34.1% |
| | ZnO norzinco CF | 1.0% |
| 10 min | PUD9 | 26.7% |
| | EPS 719 | 19.3% |
| 15 min | Texanol | 0.6% |
| | Thickener Tafigel PUR 61 | 0.4% |
| | Total | 100% |

When formed as a film this coating found to have a SRI of 115.

The present inventors have found that applying the acrylic polymer first is not better than using the compositions as described in Table 1 in terms of obtaining the desired SRI. Therefore, the compositions described above are advantaged. Further, in terms of production of roofing production, it saves time and cost to apply only one layer.

### Example 5. Comparison to other acrylic based products

There are other acrylic based dispersions available for use as coatings on roofing products. Other suitable hydrophobic acrylic dispersions known to the present inventors are described in Table 5.

**Table 5.**

| Company | Product | Chemistry |
|---|---|---|
| BASF | Acronal S790 | Styrene acrylic |
| Alberdingk | AC2003 | Acrylic copolymers |
| Celanese | Mowlitith 7128 | Pure acrylic dispersion |
| Celanese | Mowlitith 7728 | Pure acrylic dispersion |
| SWT Group | WhiteCAP | Acrylic-based commercial product |

To compare these products with the PUD coating compositions described in Example 4, free standing films were made and the solar reflectance was measured. To calculate the SRI, the average thermal emittance was taken as 88%. Of these binders, Acronal S7900 (BASF) and AC2003 (Alberdingk) provided samples with cracks that could not be measured. However, Mowlitith 7728 (with the addition of 21 wt% TiO₂ and 1 wt% ZnO) was able to be measured as a free standing film and as a coated roofing product. These results for the Mowlitith 7728 composition coated at different dry coverage rates are shown in Table 6.

**Table 6.**

| Composition No. | Test | Binder | Dry Coverage Rate (g/m²) | SR (%) | SRI |
|---|---|---|---|---|---|
| 91 free films | n/a | Mowlitith 7728 (Celanese) + 21 wt% TiO₂ + 1 wt% ZnO | N/A | 81.78 | 102 |
| 91 | Before | | 241 | 74.77 | 92 |
| 91 | TA | | 295 | 71.12 | 87 |
| 91 | ASTM D7897.18 | | 236 | 66.7 | 81 |

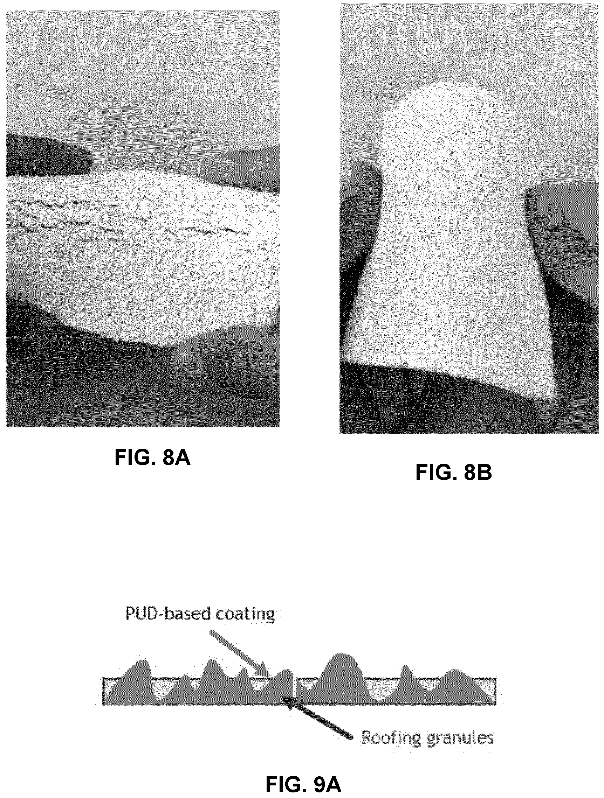

However, the coated samples with Mowlitith 7728 presented cracks when the roofing product was slightly bent. This was not the case for the polyurethane-based acrylic coatings, such as Hybrid 1 or Hybrid 2 discussed above. FIG. 8A shows a picture of the cracks developed in acrylic based coating from the Mowlitith 7728 composition at a coverage rate of 240 g/m². FIG. 8B shows a picture of a sample prepared with Hybrid 2 that does not show these cracks, even at a high dry coverage rate of 300 g/m².

### Example 6. Effect of Pseudoplastic thickeners on PUD Coatings with Hydrophobic Acrylic Polymers

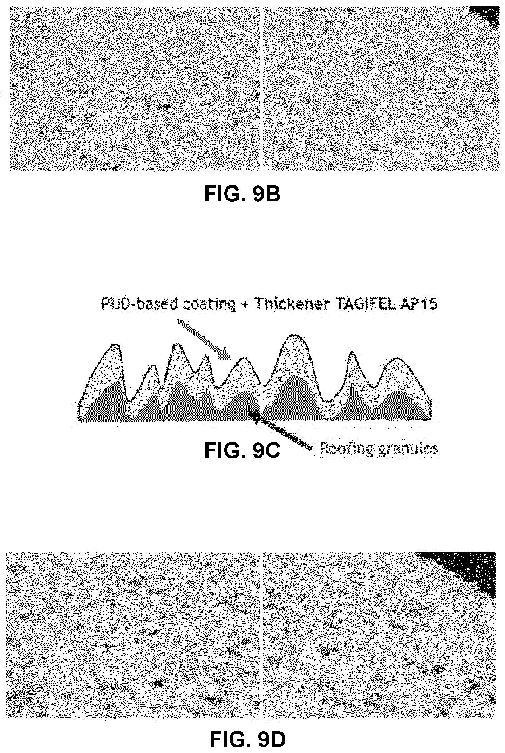

Other additives were investigated to improve the application process of the coating compositions as described herein. In particular, it was found that the use of a pseudoplastic thickener improves the application process of the PUD compositions described herein. Pseudoplastic thickeners show a large decrease in viscosity when the shear rate is increased, in accordance with shear thinning behavior. A highly pseudoplastic latex dispersion is ideal for a spray coating application. Accordingly, the inclusion of this additive allows the composition to remain at the top of the roofing granules and prevents it from flowing to the valleys of the roofing product. FIG. 9A-D shows the difference in the PUD coating with and without the pseudoplastic thickener.

Three pseudoplastic thickeners were used in the compositions as described herein and their performance was measured. The pseudoplastic thickeners used are: Tafigel PUR 85, Tafigel AP 15, and Tafigel PUR 48. The results of these tests are shown in Table 7.

**Table 7.**

| Composition No. | Test | Description Binder + Additives | Dry Coverage Rate (g/m²) | SR (%) | TE (%) | SRI |
|---|---|---|---|---|---|---|
| 88 | Before | Hybrid 1 + 0.5% Tafigel PUR 84 + 7mL H₂O | 159 | 70.4 | 88.0 | 86 |
| 88 TA | TA | Hybrid 1 + 0.5% Tafigel PUR85 + 7mL H₂O | 159 | 66.0 | 88.0 | 80 |
| 89 | Before | Hybrid 1 + 0.5% Tafigel PUR48 + 3 mL H₂O | 158 | 69.7 | 88.0 | 85 |
| 89 TA | TA | Hybrid 1 + 0.5% Tafigel PUR48 + 3 mL H₂O | 158 | 71.0 | 88.0 | 87 |
| 90 | Before | Hybrid 1 + 0.5% Ap15 + 7mL H₂O | 161 | 71.3 | 88.0 | 87 |
| 90 TA | TA | Hybrid 1 + 0.5% AP1 + 7mL H₂O | 161 | 68.5 | 88.0 | 83 |
| 96 | Before | Hybrid 2 + 0.9% AP15 | 326 | 68.5 | 95.3 | 85 |
| 96 TA | TA | Hybrid 2 + 0.9% AP15 | 276 | 66.2 | 91.1 | 81 |
| 96 | Before | Hybrid 2 thick dry at 100°C | 210 | 78.1 | 93.6 | 98 |

| | | | | | | |
|---|---|---|---|---|---|---|
| TA=thermally aged. | | | | | | |

The present inventors have found that by using a highly concentrated pseudoplastic thickener, it significantly increases the SRI with a lower dry coverage rate.

Another sample was prepared, for measurement of viscosity as a function of shear:

**Table 8.**

| Time mixing | Component | wt% |
|---|---|---|
| 5 min | Water DI | 7.2 |
| | Dispersant CX4231 | 0.5 |
| | Anti-foam SI2210 | 0.3 |
| | TiO₂ Venator (18%-20%) | 17.8 |
| | CaCO₃ Imerseal 96S | 3.8 |
| | ZnO norzinco CF | 0.8 |
| 10 min | PUD9 | 39.9 |
| | EPS 719 | 28.9 |
| 15 min | Tagifel PUR 61 | 0.6 |
| | Total | 100 |

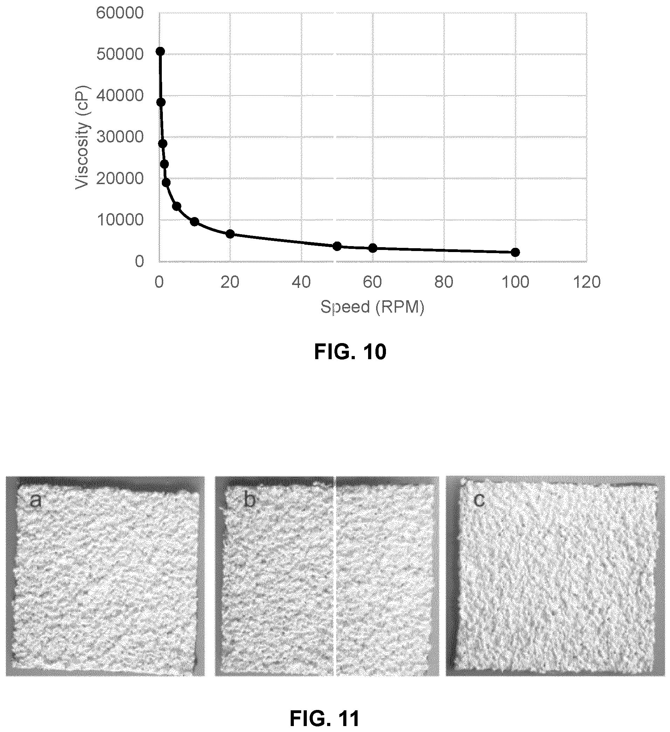

Viscosity was measured by a Brookfield Viscometer with a number 05 spindle and a container 5 cm in diameter. Results are shown in FIG. 10, all at the same time and temperature, demonstrating shear-thinning.

### Example 7. Compositions and Performance of PUD Compositions with Near-Infrared Reflective Colored Pigment

The present inventors also investigated the effects of including pigments in the coating composition to disguise or mask the yellowing observed upon aging. Near-infrared reflective (NIR) colored pigments were mixed in low quantities with Maris 400W. Three NIR colored pigments were used: orange (34H1004 Solaplex, Venator), yellow (34H1001R Solaplex (Venator)), and red (Xfast^{®} Red 3390, BASF)). One composition of the PUD with a NIR colored pigment is reported in Table 9.

**Table 9.**

| Orange 400W Maris (Big production quantity) | |
|---|---|
| Components | Mass (%) |
| PUD 9 (Maris) | 78 |
| TiO₂ | 13.5 |
| ZnO | 1.21 |
| CaCO₃ (Imerseal 96S) | 5.1 |
| Orange pigment | 0.25 |

FIG. 11 is a picture of the coating of Table 9 after aging at 70°C for (a) 1 day, (b) 5 days, and (c) 9 days.

### Performance of Free Standing Films

Further compositions were made with differing amounts of the NIR colored pigments added to the PUD. The present inventors have found that an especially desirable NIR colored pigment content is around 0.25 wt% with respect to the total weight of the composition. Compositions that meet the target SRI are reported in Table 10 as well as their solar reflectance, thermal emittance, and SRI values of free standing films made thereof.

**Table 10.**

| Composition No. | Description Binder + Additives | SR (%) | TE (%) | SRI |
|---|---|---|---|---|
| 70 | Maris 400W + 0.5% orange | 91.0 | 96.4 | 101 |
| 75 | Maris 400 W + 5% CaCO₃ + 0.5% orange | 76.3 | 94.0 | 94 |
| 81 | Maris 400W + 5% CaCO₃ + 0.25% orange | 83.6 | 95.0 | 105 |
| 82 | Maris 400W + 5% Mica MU M2/1 + 0.25% orange | 82.5 | 95.0 | 103 |
| 92 | Maris 400W + 5% CaCO₃ + 0.2% yellow | 87.3 | 96.0 | 110 |
| 96 | Orange 400W Maris (Table 5) | 83.6 | 88.0 | 105 |

### Performance on Roofing Products

The PUD coatings with NIR colored pigments were then coated on top of roofing products and the solar reflectance was measured. To calculate the SRI, a TE of 95% was taken as the average. Some of the coated roofing product were also subjected to thermal aging and then measured. The results of these measurements are shown in Table 11.

**Table 11.**

| Composition No. | Test | Description Binder + Additives | Dry Coverage Rate (g/m²) | SR (%) | SRI |
|---|---|---|---|---|---|
| 70 | Before | Maris 400W + 0.5% orange | 220 | 61.3 | 73 |
| 70 | Aged* | Maris 400W + 0.5% orange | 205 | 55.9 | 66 |
| 75 | Before | Maris 400W + 5% CaCO₃ + 0.5% orange | 284 | 69.4 | 85 |
| 75 | Aged* | Maris 400W + 5% CaCO₃ + 0.5% orange | 280 | 62.7 | 75 |
| 81 | Before | Maris 400W + 5% CaCO₃ + 0.25% orange | 220 | 76.2 | 94 |
| 81 | Aged* | Maris 400W + 5% CaCO₃ + 0.5% orange | 284 | 70.5 | 85 |
| 82 | Before | Maris 400W + 5% Mica MU M2/1 + 0.25% orange | 232 | 65.6 | 79 |
| 82 | Aged* | Maris 400W + 5% Mica MU M2/1 + 0.25% orange | 208 | 63.2 | 77 |
| 82.a | Before | Marris 400W + 5% CaCO₃ + 0.2% orange | 221 | 77.0 | 95 |
| 92 | Before | Maris 400W + 5% CaCO₃ + 0.2% yellow | 259 | 64.1 | 77 |
| 92 | Aged* | Maris 400W + 5% CaCO₃+ 0.2% yellow | 244 | 62.0 | 74 |

| | | | | | |
|---|---|---|---|---|---|
| *7 days at 70 °C. | | | | | |

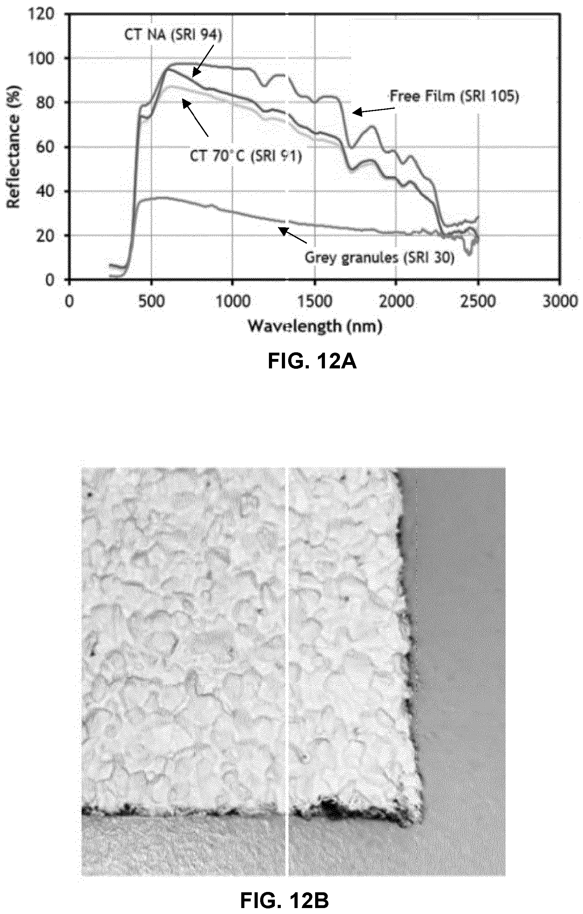

Composition 81 is close to the requirements for SRI after exposure. Moreover, Mica MU M2/1 allows composition 82 to keep a similar value of SRI while protecting the coatings from yellowing. Figure 12A shows the solar reflectance as a function of wavelength for composition 81 for both thermally aged samples (at 70°C) and non-aged samples. Figure 12B shows a picture of composition 81 on top of a roofing product after spray coating.

### Example 8. Drying Time of PUD Coatings on Roofing Products

### Drying Test on Hot Roofing Products

To gain further insight into the durability of the coatings, sample roofing substrates are preheated for 5 minutes with either a heating air gun or inside an oven until the surface temperature has reached 120°C. Then, the liquid PUD coating, as described herein, is sprayed onto the sample, as described above in Example 2. Samples are then weighed to provide a wet basis weight (the initial weight linked to wet coverage rate). The sample are then quickly placed under a heat source, either a heat air gun or an infrared lamp, to dry. The heat air gun is set at 160°C and an air speed of 7. The heat gun is placed 17 cm away from the sample. For the infrared lamp, the weight loss can be precisely followed every second. For the heat air gun system, samples are weighed every 30 seconds while constantly checking the surface temperature with an infrared thermometer. Once the mass is stable at a maximum drying time of 5 minutes, the heat source is stopped.

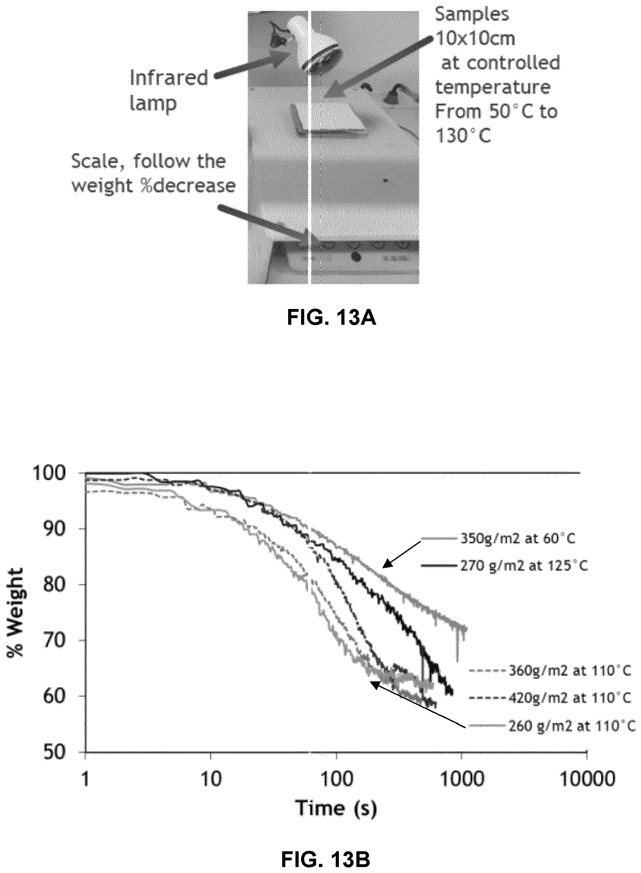

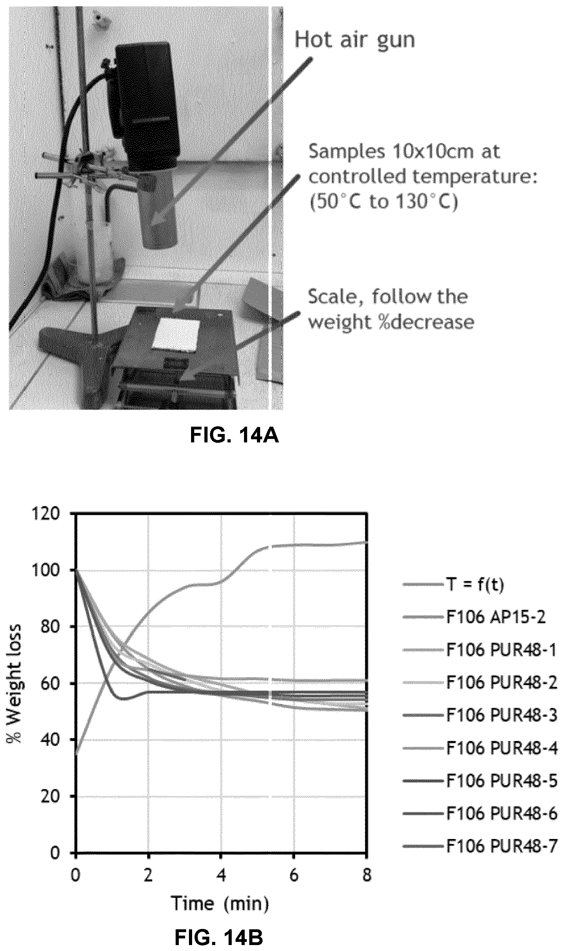

The orange 400W composition (see Table 5) was dried with the infrared lamp (setup shown in FIG. 13A), results of which are shown in FIG. 13B and the hybrid 2 composition (see Table 1) was dried with the heat gun (setup shown in FIG. 14A), results of which are shown in FIG. 14B.

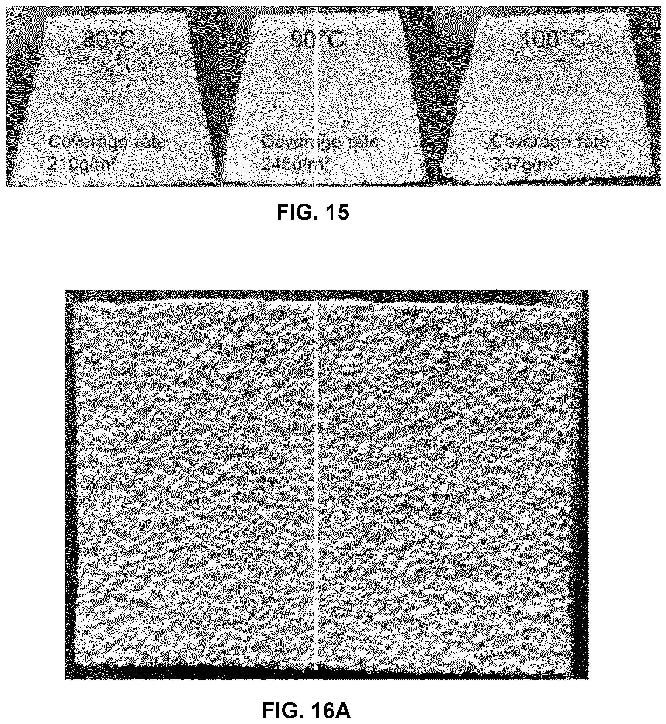

It was found that the hybrid 2 composition sample can dry between 1 and 5 minutes depending on the coverage rate and the surface temperature. However, the key problem while drying is that if the temperature is higher than 100°C, air bubbles are trapped within the coating and forms a skin, as shown in FIG. 15. However, the higher the temperature, the better the SRI (SRI = 86, 91, 95 for 80°C, 90°C, and 100°C, respectively).

### Fast Drying Compositions on Hot Roofing Products

The compositions test above are low cost, as they contain relatively little TiO₂ and are applied at a lower coverage rate. They are also stable after 1 week at 70°C. However, the coatings fail to dry below 100 s and form bubbles when drying a high temperature. Other additives are therefore needed to improve the quality of the final coating.

To prevent the skin formation as shown in FIG. 15, it is known in the art to add additives that retard the coalescence of the latex particles and enhance their deformability. In doing so, the Tg (glass transition temperature) of the latexes is modified. Some coalescing agents, such as propylene glycol phenyl ether (PPh), are able to modify the deformability of the latexes and act as a plasticizer. Other additives, such as ethylene glycol and Texanol, can be added to slightly modify the size of the latexes. For instance, they can adsorb or desorb water, changing the hydrodynamic radius of the latex, and thus its diffusion coefficient. Another additive, Byketol PC, is a modified urea provided by BYK that can delay the formation of a skin by creating steric repulsive forces between latexes, although the precise mechanism is not known.

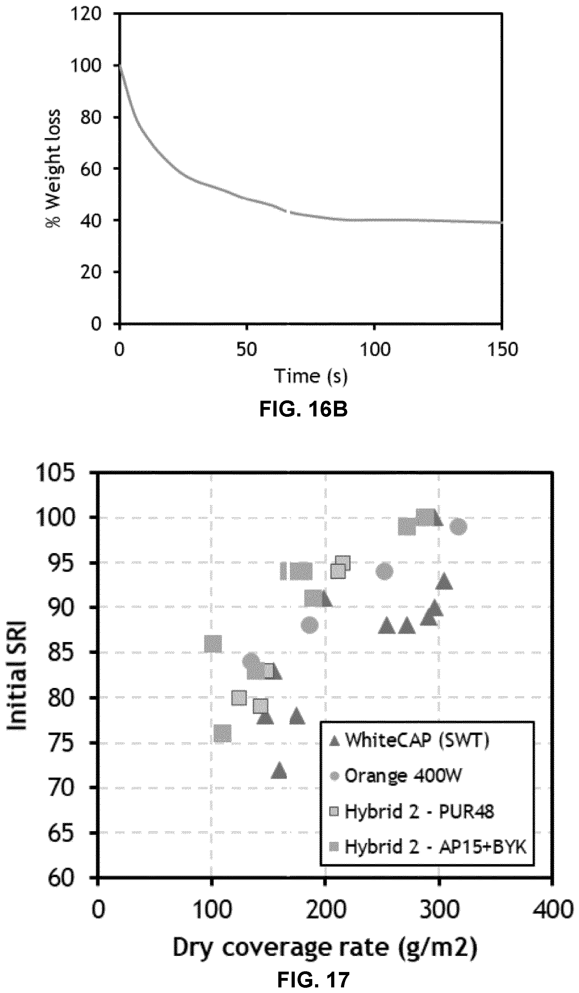

To the hybrid 2 composition, 5 wt% Byketol and 0.7 wt% TAFIGEL AP 15 (a thickening agent) was added and then applied to a hot roofing product to simulate application on a dark-colored roofing material on a sunny day. The sample was then dried at high temperatures (at 120°C) at around 60 second using the infrared lamp set up described above. FIG. 16A is a picture of the roofing product, and FIG. 16B is a graph of weight loss as a function of time. This sample also exhibited high SRI (SRI = 86, dry coverage rate of 100 g/m²).

To the Orange 400W composition, 5 wt% Byketol and 0.7 wt% AP15 (a thickening agent) was added and applied to a roofing product at high temperature. The initial SRI as a function of dry coverage rate for the best compositions were measured, the results of which are shown in FIG. 17. These compositions are compared with WhiteCAP, an acrylic based commercial product from SWT Groupe, designed to be applied to bitumen membranes while keeping a high solar reflectance.

It will be apparent to those skilled in the art that various modifications and variations can be made to the processes and devices described here without departing from the scope of the disclosure. Thus, it is intended that the present disclosure cover such modifications and variations of this invention provided they come within the scope of the appended claims and their equivalents.

## Claims

1. An aqueous coating composition comprising water, and, dispersed in the water,
a functionalized anionic polyurethane present in an amount in the range of 10-80 wt%, preferably 20-80 wt% of the composition on a dry solids basis;
a water-insoluble transition metal crosslinking agent present in an amount in the range of 0.5-30 wt% of the composition on a dry solids basis; and
at least one of:
a hydrophobic acrylic polymer present in an amount in the range of 20 wt% to 80 wt% on a dry solids basis, and
a near-infrared reflective colored pigment present in an amount of at least 0.1 wt%, e.g., in the range of 0.2 wt% to 10 wt% on a dry solids basis.

2. The composition of claim 1, wherein the coating composition comprises the hydrophobic acrylic polymer.

3. The composition of claim 1 or claim 2, wherein the hydrophobic acrylic polymer has a glass transition temperature of no more than 30 °C.

4. The composition of any of claims 1-3, wherein the coating composition comprises the near-infrared reflective colored pigment.

5. The composition of claim 4, wherein the near-infrared reflective colored pigment is a yellow near-infrared reflective colored pigment, an orange near-infrared reflective colored pigment, a red near-infrared reflective colored pigment, or a combination thereof.

6. The composition of any of claims 1-5, wherein anions of the functionalized anionic polyurethane are carboxylate anions and wherein the functionalized anionic polyurethane is functionalized with alkoxysilanes.

7. The composition of any of claims 1-6, wherein the water-insoluble transition metal crosslinking agent is zinc oxide, aluminum oxide, tin oxide, and/or tungsten oxide.

8. The composition of any of claims 1-7, wherein a weight ratio of water-insoluble transition metal crosslinking agent to functionalized anionic polyurethane is 0.01-0.4.

9. The composition of any of claims 1-8, wherein the composition further comprises reflective particles (e.g., titanium oxide), present in an amount in the range of 2-30 wt% on a dry solids basis.

10. The composition of any of claims 1-9, further comprising a thickening agent (e.g. a water soluble organic polymer such as cellulose derivatives, salts of poly(acrylic acid) and copolymers thereof, xanthan, and poly(vinyl alcohol); or nonionic polyurethane associate thickeners).

11. A solar reflective coating that comprises
a functionalized anionic polyurethane present in an amount in the range of 10-80 wt%, preferably 20-80 wt% of the composition on a dry solids basis;
a water-insoluble transition metal crosslinking agent present in an amount in the range of 0.5-30 wt% of the composition on a dry solids basis; and
at least one of:
a hydrophobic acrylic polymer present in an amount in the range of 20 wt% to 80 wt% on a dry solids basis, and
a near-infrared reflective colored pigment present in an amount of at least 0.1 wt%, e.g., in the range of 0.2 wt% to 10 wt% on a dry solids basis.

12. The solar reflective coating of claim 11, having a solar reflectance (SR) of at least 70%.

13. The solar reflective coating of claim 11 or claim 12, having a thickness in the range of 25 to 2000 µm.

14. A solar-reflective building surface comprising a building surface; and a solar reflective coating according to any of claims 11-13 disposed on the building surface.

15. The solar-reflective surface according to claim 14, wherein the building surface is concrete, brick, wood, plastic such as PVC, metal such as steel, or fiberglass composite.

## Patentansprüche

1. Wässrige Beschichtungszusammensetzung, umfassend Wasser und, dispergiert in dem Wasser,
ein funktionalisiertes anionisches Polyurethan, das in einer Menge in dem Bereich von 10-80 Gew.-%, vorzugsweise 20-80 Gew.-% der Zusammensetzung vorhanden ist, bezogen auf eine Trockenfeststoffmasse;
ein wasserunlösliches Übergangsmetall-Vernetzungsmittel, das in einer Menge in dem Bereich von 0,5-30 Gew.-% der Zusammensetzung vorhanden ist, bezogen auf eine Trockenfeststoffmasse; und
mindestens eines von:
einem hydrophoben Acrylpolymer, das in einer Menge von 20 Gew.-% bis 80 Gew.-% vofhanden ist, bezogen auf eine Trockenfeststoffmasse, und
einem Nahinfrarot-reflektierenden Farbpigment, das in einer Menge von mindestens 0,1 Gew.-%, z. B. in dem Bereich von 0,2 Gew.-% bis 10 Gew.-% vorhanden ist, bezogen auf eine Trockenfeststoffmasse.

2. Zusammensetzung nach Anspruch 1, wobei die Beschichtungszusammensetzung das hydrophobe Acrylpolymer umfasst.

3. Zusammensetzung nach Anspruch 1 oder 2, wobei das hydrophobe Acrylpolymer eine Glasübergangstemperatur von nicht mehr als 30 °C aufweist.

4. Zusammensetzung nach einem der Ansprüche 1 bis 3, wobei die Beschichtungszusammensetzung das Nahinfrarot-reflektierende Farbpigment umfasst.

5. Zusammensetzung nach Anspruch 4, wobei das Nahinfrarot-reflektierende Farbpigment ein gelbes Nahinfrarot-reflektierendes Farbpigment, ein oranges Nahinfrarot-reflektierendes Farbpigment, ein rotes Nahinfrarot-reflektierendes Farbpigment oder eine Kombination davon ist.

6. Zusammensetzung nach einem der Ansprüche 1 bis 5, wobei Anionen des funktionalisierten anionischen Polyurethans Carboxylat-Anionen sind und wobei das funktionalisierte anionische Polyurethan mit Alkoxysilanen funktionalisiert ist.

7. Zusammensetzung nach einem der Ansprüche 1 bis 6, wobei das wasserunlösliche Übergangsmetall-Vernetzungsmittel Zinkoxid, Aluminiumoxid, Zinnoxid und/oder Wolframoxid ist.

8. Zusammensetzung nach einem der Ansprüche 1 bis 7, wobei das Gewichtsverhältnis von wasserunlöslichem Übergangsmetall-Vernetzungsmittel zu funktionalisiertem anionischem Polyurethan 0,01-0,4 beträgt.

9. Zusammensetzung nach einem der Ansprüche 1 bis 8, wobei die Zusammensetzung ferner reflektierende Partikel (z. B. Titanoxid) umfasst, die in einer Menge von 2-30 Gew.-% vorhanden sind, bezogen auf eine Trockenfeststoffmasse.

10. Zusammensetzung nach einem der Ansprüche 1 bis 9, ferner umfassend ein Verdickungsmittel (z. B. ein wasserlösliches organisches Polymer wie Cellulosederivate, Salze von Poly(acrylsäure) und Copolymere davon, Xanthan und Poly(vinylalkohol); oder nichtionische Polyurethan-Verdickungsmittel).

11. Solarreflektierende Beschichtung, die umfasst
ein funktionalisiertes anionisches Polyurethan, das in einer Menge in dem Bereich von 10-80 Gew.-%, vorzugsweise 20-80 Gew.-% der Zusammensetzung vorhanden ist, bezogen auf eine Trockenfeststoffmasse;
ein wasserunlösliches Übergangsmetall-Vernetzungsmittel, das in einer Menge in dem Bereich von 0,5-30 Gew.-% der Zusammensetzung vorhanden ist, bezogen auf eine Trockenfeststoffmasse; und
mindestens eines von:
einem hydrophoben Acrylpolymer, das in einer Menge von 20 Gew.-% bis 80 Gew.-% vofhanden ist, bezogen auf eine Trockenfeststoffmasse, und
einem Nahinfrarot-reflektierenden Farbpigment, das in einer Menge von mindestens 0,1 Gew.-%, z. B. in dem Bereich von 0,2 Gew.-% bis 10 Gew.-% vorhanden ist, bezogen auf eine Trockenfeststoffmasse.

12. Solarreflektierende Beschichtung nach Anspruch 11, die eine Solarreflexion (SR) von mindestens 70 % aufweist.

13. Solarreflektierende Beschichtung nach Anspruch 11 oder 12, die eine Dicke in dem Bereich von 25 bis 2000 µm aufweist.

14. Solarreflektierende Gebäudeoberfläche, umfassend eine Gebäudeoberfläche; und eine solarreflektierende Beschichtung nach einem der Ansprüche 11 bis 13, die auf der Gebäudeoberfläche angeordnet ist.

15. Solarreflektierende Oberfläche nach Anspruch 14, wobei die Gebäudeoberfläche Beton, Ziegel, Holz, Kunststoff wie PVC, Metall wie Stahl oder Glasfaserverbundwerkstoff ist.

## Revendications

1. Composition aqueuse de revêtement comprenant de l'eau, et, dispersés dans l'eau,
un polyuréthane anionique fonctionnalisé présent en une quantité dans la plage de 10 à 80 % en poids, de préférence 20 à 80 % en poids de la composition sur une base de matières solides sèches ;
un agent de réticulation de métal de transition insoluble dans l'eau présent en une quantité dans la plage de 0,5 à 30 % en poids de la composition sur une base de matières solides sèches ; et
au moins l'un parmi :
un polymère acrylique hydrophobe présent en une quantité dans la plage de 20 % en poids à 80 % en poids sur une base de matières solides sèches, et
un pigment coloré de réflexion d'infrarouge proche présent en une quantité d'au moins 0,1 % en poids, par exemple, dans la plage de 0,2 % en poids à 10 % en poids sur une base de matières solides sèches.

2. Composition selon la revendication 1, dans laquelle la composition de revêtement comprend le polymère acrylique hydrophobe.

3. Composition selon la revendication 1 ou la revendication 2, dans laquelle le polymère acrylique hydrophobe a une température de transition vitreuse n'excédant pas 30 °C.

4. Composition selon l'une quelconque des revendications 1 à 3, dans laquelle la composition de revêtement comprend le pigment coloré de réflexion d'infrarouge proche.

5. Composition selon la revendication 4, dans laquelle le pigment coloré de réflexion d'infrarouge proche est un pigment coloré jaune de réflexion d'infrarouge proche, un pigment coloré orange de réflexion d'infrarouge proche, un pigment coloré rouge de réflexion d'infrarouge proche, ou une combinaison de ceux-ci.

6. Composition selon l'une quelconque des revendications 1 à 5, dans laquelle des anions du polyuréthane anionique fonctionnalisé sont des anions carboxylate et dans laquelle le polyuréthane anionique fonctionnalisé est fonctionnalisé avec des alcoxysilanes.

7. Composition selon l'une quelconque des revendications 1 à 6, dans laquelle l'agent de réticulation de métal de transition insoluble dans l'eau est de l'oxyde de zinc, de l'oxyde d'aluminium, de l'oxyde d'étain, et/ou de l'oxyde de tungstène.

8. Composition selon l'une quelconque des revendications 1 à 7, dans laquelle un rapport pondéral de l'agent de réticulation de métal de transition insoluble dans l'eau au polyuréthane anionique fonctionnalisé va de 0,01 à 0,4.

9. Composition selon l'une quelconque des revendications 1 à 8, dans laquelle la composition comprend en outre des particules réfléchissantes (par exemple, de l'oxyde de titane), présentes en une quantité dans la plage de 2 à 30 % en poids sur une base de matières solides sèches.

10. Composition selon l'une quelconque des revendications 1 à 9, comprenant en outre un agent épaississant (par exemple un polymère organique hydrosoluble tel que des dérivés de cellulose, des sels d'acide poly(acrylique) et des copolymères de celui-ci, du xanthane et de l'alcool polyvinylique ; ou des épaississants associés de type polyuréthane non ionique).

11. Revêtement de réflexion solaire qui comprend
un polyuréthane anionique fonctionnalisé présent en une quantité dans la plage de 10 à 80 % en poids, de préférence 20 à 80 % en poids de la composition sur une base de matières solides sèches ;
un agent de réticulation de métal de transition insoluble dans l'eau présent en une quantité dans la plage de 0,5 à 30 % en poids de la composition sur une base de matières solides sèches ; et
au moins l'un parmi :
un polymère acrylique hydrophobe présent en une quantité dans la plage de 20 % en poids à 80 % en poids sur une base de matières solides sèches, et
un pigment coloré de réflexion d'infrarouge proche présent en une quantité d'au moins 0,1 % en poids, par exemple, dans la plage de 0,2 % en poids à 10 % en poids sur une base de matières solides sèches.

12. Revêtement de réflexion solaire selon la revendication 11, ayant une réflectance solaire (SR) d'au moins 70 %.

13. Revêtement de réflexion solaire selon la revendication 11 ou la revendication 12, ayant une épaisseur dans la plage de 25 à 2000 µm.

14. Surface de bâtiment à réflexion solaire comprenant une surface de bâtiment ; et un revêtement de réflexion solaire selon l'une quelconque des revendications 11 à 13 disposé sur la surface de bâtiment.

15. Surface à réflexion solaire selon la revendication 14, dans laquelle la surface de bâtiment est du béton, de la brique, du bois, du plastique tel que du PVC, du métal tel que de l'acier ou un composite en fibre de verre.
